(19) Europäisches Patentamt
European Patent Office
Office européen des brevets

(11) **EP 4 390 325 A1**

(12) **EUROPEAN PATENT APPLICATION**

(43) Date of publication:
**26.06.2024   Bulletin 2024/26**

(21) Application number: **22275164.6**

(22) Date of filing: **20.12.2022**

(51) International Patent Classification (IPC):
**G01D 5/34** *(2006.01)*      **G01D 5/38** *(2006.01)*

(52) Cooperative Patent Classification (CPC):
**G01D 5/38; G01D 5/345**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Renishaw PLC
Wotton-under-Edge, Gloucestershire GL12 8JR
(GB)**

(72) Inventor: **The designation of the inventor has not
yet been filed**

(74) Representative: **Rolfe, Edward William et al
Patent Department
Renishaw plc
New Mills
Wotton-under-Edge
Gloucestershire GL12 8JR (GB)**

(54) **ENCODER APPARATUS**

(57)     A position measurement encoder apparatus comprising: a scale comprising a series of position features which are readable by a readhead, the series extending along a measuring dimension; a readhead comprising: a polarised light source for emitting polarised light toward the scale; a sensor configured to detect an optical signal from the scale's position features which can be used to determine the relative position of the scale and readhead along the measuring dimension; and a polarisation manipulator, located in the optical path between the polarised light source and the sensor, configured such that regardless of the predominant input polarisation orientation of the footprint of light received by the polarisation manipulator, the degree of polarisation of the light output from the polarisation manipulator is less than that of the polarised light emitted from the polarised light source.

Figure 11

**Description**

This invention relates to a position measurement encoder apparatus.

A position measurement encoder apparatus (hereinafter referred to as an "encoder apparatus" or "position encoder") can be used to determine movement of two relatively moveable parts of an apparatus. A position encoder typically comprises a scale and a readhead (one provided on one part of the apparatus and the other on the other part of the apparatus). The scale can comprise a series of features which the readhead can read so as to measure its position along the scale (the scale's features, for example, could be provided on a substrate which is fastened to the part of the apparatus, or could even be formed integrally as part of the apparatus).

A so-called "incremental" position encoder can work, for example, by "counting" its position along the length of the scale, e.g. from its start-up position and/or from a defined reference marker(s) on the scale. As will be understood, the way in which the "counting" of the readhead's position is done can vary from encoder apparatus to encoder apparatus. For example, one way is to generate a resultant field, such as an interference fringe field/pattern ("fringe field"), modulated spots, or image at a detector in the readhead, which changes with relative movement. For example, light from a source within the readhead can hit the scale which diffracts the light into a number of diffraction orders. The diffraction orders interfere/interact/recombine at the detector to produce the resultant field. Optionally, an optical element (for example a diffraction grating and/or lens) within the readhead can be provided which redirects/deflects diffraction orders such that they interfere/interact at the detector so as to produce the resultant field. As the scale and readhead move relative to each other, the resultant field changes. The readhead can record and/or report movement and position by monitoring the change of the resultant field (e.g. movement of the interference fringe pattern/fringe field). Such a position encoder is described in US5861953.

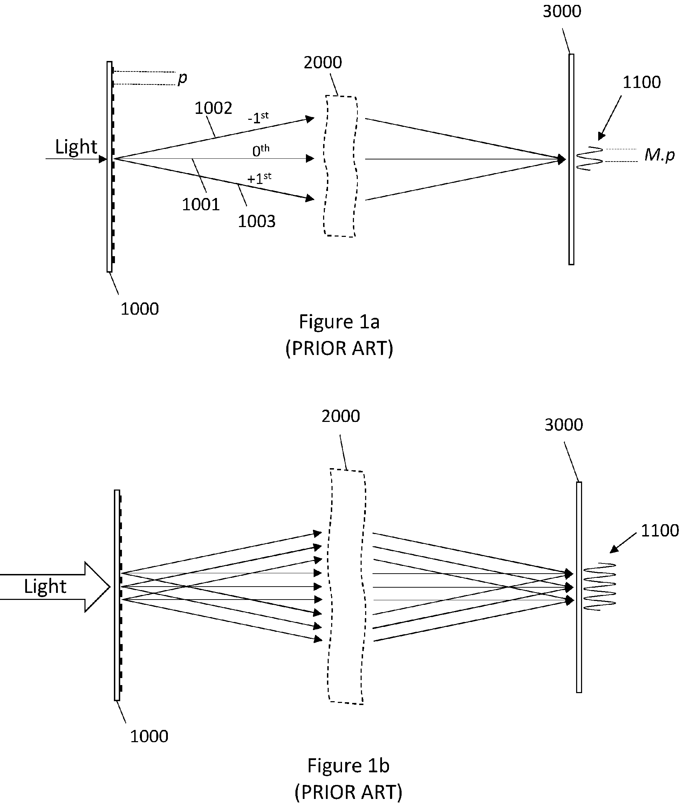

Figure 1a schematically illustrates the optical workings of such a generic prior art incremental position encoder system. The scale 1000 has a periodic series of features having a period "p" is illuminated by light, thereby producing a set of diffraction orders 1001, 1002, 1003. As will be understood, references to light in this document include visible and non-visible light, from the ultraviolet to infra-red ranges. In the particular embodiment described, near infra-red light is used. The diffraction orders 1001, 1002, 1003 are relayed to a sensor 3000 by a relay element 2000 (e.g. a lens, prism or a diffraction grating) (the sensor and relay element both being located in a readhead which is moveable relative to the scale 1000). The diffraction orders interfere at the sensor 3000, thereby producing an interference fringe pattern/field (schematically illustrated by the wave 1100) at the sensor 3000 having a period equal to $M.p$; where $M$ is the magnifying factor of the optical system and $p$ is the scale period. In Figure 1a, the light is shown as being transmitted through the scale, although as will be understood, the light could be reflected from the scale, and so could originate from a light source located on the same side of the scale as the sensor. As will be understood, typically, the source of the light, the relay element 2000 and the sensor 3000 are all provided by/in a readhead device which is configured to move relative to the scale 1000.

Figure 1a is a simplified illustration of the optical situation encountered in an encoder apparatus. In reality, the optical situation shown in Figure 1a is repeated many times over along the length of the scale (i.e. over the area that is illuminated by the source), producing a longer interference fringe field/pattern at the detector (e.g. schematically illustrated in Figure 1b).

For illustrative purposes, only the 0th and +/- 1st orders are shown in Figures 1a and 1b. As will be understood, higher diffraction orders will be produced, and can contribute to the formation of the fringe field at the sensor 3000, although their intensity and therefore contribution to the fringe field are typically much weaker than the 0th and +/- 1st diffraction orders (with higher orders being progressively weaker in intensity).

As will be understood, where the mark-space ratio (i.e. the ratio of the width of the scale features to the spacing between the marks) of the scale is perfectly 1: 1 (as is often the case with amplitude scale for an encoder apparatus), even diffraction orders (e.g. +/- 2nd, +/- 4th diffraction orders) will not be produced, and only odd diffraction orders will be produced (e.g. +/- 3rd, +/-5th diffraction orders). In practice, some minor fabrication errors might mean that the mark-space ratio of the scale is not perfectly 1: 1 and so even diffraction orders might be present (albeit likely having significantly less intensity than adjacent odd diffraction orders). As will be understood, where the mark-space ratio of the scale is deliberately formed such that it is not 1: 1, then significant even diffraction orders can be present.

For the sake of simplicity of illustration, the ray diagrams of Figures 1a and 1b are shown as transmissive ray diagrams (that is the light is shown as being transmitted through each of the scale and optical relay element), whereas in reality at least one of these could be reflective.

As will be understood, reference marks can be provided, for instance next to and/or embedded within the scale's diffraction features, in order to provide defined reference positions. Such a position encoder is described in US7659992.

So-called "absolute" position encoders are also known which enable the absolute position of the readhead relative to a scale to be determined without the need to count from a predetermined position, such as a reference mark or an end position of the scale. Absolute position encoders typically comprise a scale with unique position data formed on it along the measuring length of the scale. The data can be in the form of, for instance, a pseudorandom sequence or discrete codewords. By reading this data as the scale reader passes over the scale, the scale reader can determine its absolute position. Examples of absolute position encoders are described in US7499827, US10132657 and US2012/0072169. It is known that some absolute encoders use incremental scales alongside absolute scales. It is also known (and for example described in US7499827) that, optionally, the absolute scale retains sufficient periodicity such that the scale can be used as a periodic incremental scale. Either way, such incremental scale can be used, for example, to fine-tune the determined absolute position. Optionally, such a system can be used such that after start-up and the absolute position has been determined, the relative position of the readhead and scale is subsequently measured by "counting" the change in position using the incremental scale. Such an incremental scale can be read in the same way as mentioned above, e.g. by analysing a resultant field produced (at a sensor in the readhead) by the diffraction orders created by the scale.

The present invention relates to an improved optical encoder.

According to a first aspect of the invention there is provided a position measurement encoder apparatus comprising: a scale comprising a series of position features which are readable by a readhead, the series extending in a measuring dimension; a readhead comprising: i) a polarised light source for emitting polarised light toward the scale; ii) a sensor configured to detect an optical signal from the scale's position features which can be used to determine the relative position of the scale and readhead along the measuring dimension; and iii) an polarisation manipulator, located in the optical path between the polarised light source and the sensor, configured such that regardless of the predominant input polarisation orientation of the footprint of light received by the polarisation manipulator (or in other words, for all possible predominant input polarisation orientations), the degree of polarisation of the light output from the polarisation manipulator is less than that of the polarised light emitted from the polarised light source.

It is typical that optical encoders employ the use of non-polarised light sources. Indeed, at the time of writing, all optical encoders sold by Renishaw plc, utilise light emitting diodes (LEDs) which emit unpolarised light. The present invention provides an alternative optical encoder which utilises a polarised light source for emitting the light that illuminates the scale. For the purposes of this patent application, a polarised light source means a light source which emits light, the degree of polarisation of which is at least 0.2. (In other words, optionally, the degree of polarisation of the light emitted from the polarised light source is not less than 0.2). The light source could comprise, for example, a laser light source, for instance a Vertical Cavity Surface-Emitting Laser (VCSEL). As will be understood by those skilled in the art, laser light sources such as VCSELs emit polarised light, for example typically having a degree of polarisation of at least 0.3 (typically between 0.3 and 0.7).

As will be understood, the "degree of polarisation" (or "DOP" as it will sometimes be referred to herein) of light is a simple metric which quantifies how polarised the light is. Completely unpolarised light has a DOP of 0 (or 0%) while completely polarised light has a DOP of 1 (or 100%). The DOP of light can easily be measured experimentally as will now be described. The light is passed through a linear polariser and the outgoing light that has passed through the linear polariser falls on a photodetector. The linear polariser is rotated through 180 degrees, and the optical power observed at the photodetector is measured. The optical power at the photodetector will vary with a sinusoidal pattern if the light has polarisation. The modulation of this sinusoid reveals the DOP. Accordingly:

$$DOP = \frac{max\ power - min\ power}{max\ power + min\ power} \qquad (1)$$

Compared to LEDs, laser light sources can provide optical power benefits which has been found to provide metrological performance improvements, in particular reduced jitter due to reduced noise. The inventors have also found that the use of a polarisation manipulator which is configured to reduce the degree of polarisation of the light from a polarised light source, such as a laser, can also be beneficial, as explained in more detail below.

As mentioned above, as far as this invention is concerned, a polarised light source can be any light source which emits light having a DOP of at least 0.2. However, of course, the DOP of the polarised light source could be higher. Indeed, the higher the DOP of the of the polarised light source the greater the benefit the polarisation manipulator can be.

Preferably, the polarisation manipulator is configured such that the DOP of light emitted therefrom is not greater than 0.1.

The polarisation manipulator could comprise a diffuser. Preferably, the polarisation manipulator comprises a retarder, for instance a "patterned retarder" (in other words, a "non-uniform retarder" or "structured retarder") as explained in more detail below. Accordingly, the polarisation manipulator could be referred to as an optical retarder element.

As will be understood, the use of the terms "pattern" and "patterned" in this document, especially in connection with the polarisation manipulator, is not intended to imply that the presence of any sort of repeating configuration. Rather, the terms "pattern" and "patterned" are used to confer that the polarisation manipulator, e.g. the retarder, has a non-uniform design/form. As explained in more detail below, it is possible that the design/form/pattern of the polarisation manipulator (e.g. the retarder) does repeat, but this is not necessarily the case, and it can be preferred that it does not repeat.

The polarisation manipulator could comprise a spatial polarisation manipulator or a temporal (in other words, "time-based") polarisation manipulator. As will be understood, in the case of a spatial polarisation manipulator, the polarisation state of the light is spatially mixed (or in other words spatially "scrambled") by the polarisation manipulator (i.e. the polarisation state is mixed/varies across the footprint of light leaving the polarisation manipulator), whereas in the case of temporal/time-based polarisation manipulator, the polarisation state of the light is time/temporally-mixed (or in other words time/temporally-scrambled).

Optionally, the polarisation manipulator is configured such that regardless of the DOP, and regardless of the predominant input polarisation orientation, of the footprint of light received by the polarisation manipulator, the light output from the polarisation manipulator comprises a mix of polarisation orientations. As will be understood, in the case of a spatial polarisation manipulator, the light output from the polarisation manipulator comprises a mix of polarisation orientations across its footprint/extent. In such a case, preferably the polarisation manipulator is configured such that the light output from the polarisation manipulator has a balanced mix of polarisation orientations across its footprint/extent (e.g. such that the optical power of light output therefrom is substantially equal along orthogonal polarisation axes irrespective of the orientations of the orthogonal polarisation axes). Substantially equal can mean that the difference in the optical power along any two orthogonal polarisation axes is not more than 5%, optionally not more than 2%, in particular not more than 1%. Preferably, the mix of polarisation orientations are substantially evenly distributed across the footprint of light output from the polarisation manipulator. The polarisation manipulator could be configured such that regardless of the DOP, and regardless of the predominant input polarisation orientation, of the footprint of light received by the polarisation manipulator, the light output from the polarisation manipulator has a mix of at least four, more preferably a mix of at least eight, optionally a mix of at least 16 different polarisation orientations, especially preferably a mix of at least 25 different polarisation orientations (across its footprint/extent).

A polarisation manipulator (e.g. an optical retarder element) according to the present invention can comprise a non-uniform fast axis, and/or a non-uniform retardance (or waveplate fraction), that varies along at least one axis/dimension. In other words, a polarisation manipulator (e.g. an optical retarder element) according to the present invention can comprise a fast axis, and/or a retardance, that is non-uniform along at least one axis/dimension The non-uniform fast axis and/or non-uniform retardance can vary along a dimension perpendicular to the measuring dimension. The non-uniform fast axis and/or non-uniform retardance can vary along a dimension parallel to the measuring dimension. The optical retarder element could comprise a non-uniform fast axis and/or non-uniform retardance that varies along two orthogonal axes (e.g. which can be aligned so as to be parallel and perpendicular respectively to the measuring dimension). However, to avoid adverse diffraction effects, it can be preferred that the non-uniform fast axis and/or non-uniform retardance varies only along the dimension perpendicular to the measuring dimension.

The fast axis and/or retardance of the polarisation manipulator (e.g. optical retarder element) could vary in a periodic manner (in other words, the fast axis state could vary according to a repeating design/pattern). However, it can be preferred that the fast axis and/or retardance varies in a non-periodic manner (in other words, according to a non-repeating design/pattern) (this can especially be the case if the light is to pass through the optical retarder element more than once). Accordingly, the polarisation manipulator (e.g. optical retarder element) can be configured such that within at least the region of the footprint of light output from the polarisation manipulator/optical retarder element that forms the optical signal at the sensor, the fast axis and/or retardance (and hence the polarisation orientation of the light emitted therefrom) varies non-periodically (in other words, varies in a non-periodic manner/according to a non-repeating design/pattern). In particular, the fast axis can vary according to a phase-wrapped linear function of position along at least one dimension of the optical retarder element. Accordingly, a preferred embodiment of a non-uniform/patterned retarder can comprise fast-axis values that vary according to a phase-wrapped linear function which provides no repeats over at least the length of the region of the footprint of light output from the non-uniform/patterned retarder that forms the optical signal at the sensor.

In a preferred embodiment of the invention, the polarisation manipulator is configured such that (regardless of the predominant input polarisation orientation of the light received by the polarisation manipulator, such light having a DOP of at least 0.2) the DOP of the light output from at least the region of the footprint of light output from the polarisation manipulator that forms the optical signal at the sensor is less than that of the polarised light emitted from the polarised light source, and preferably is not more than half that of the polarised light hitting the polarisation manipulator (e.g. optical retarder element) (or not more than half that of the polarised light emitted from the polarised light source). In particular, preferably the polarisation manipulator is configured such that (regardless of the DOP, and regardless of the predominant input polarisation orientation, of the light hitting the polarisation manipulator) the degree of polarisation of the light emitted from the polarisation manipulator on its final pass therethrough (which, depending on the embodiment could be, for instance after just one pass or multiple passes therethrough) is not greater than 0.1, more preferably not more than 0.05, for instance not more than 0.02. In particular, preferably the DOP of the light output from at least the region of the footprint of light output from the polarisation manipulator that forms the optical signal at the sensor is not more than 0.1, for example not more than 0.05, for instance not more than 0.02. The polarisation manipulator can be configured such that (regardless of the DOP and regardless of the predominant input polarisation orientation of the light hitting the polarisation manipulator) at least the region of the footprint of light output from the polarisation manipulator that forms the optical signal at the sensor has a substantially balanced mix of different polarisation orientations (e.g. such that the optical power of the light output from the polarisation manipulator within said region, is substantially equal along orthogonal polarisation axes irrespective of the orientations of the orthogonal polarisation axes).

Optionally, the light from the polarised light source is configured to pass through the polarisation manipulator a first time on its way to the scale and also a second (e.g. final) time after it has been reflected from the scale. In such a case, preferably the polarisation manipulator is configured such that, after the light's second (e.g. final) pass through the polarisation manipulator, the DOP of the light output from at least the region of the footprint of light output from the polarisation manipulator that forms the optical signal at the sensor is less than that of polarised light emitted from the polarised light source. In particular, preferably the polarisation manipulator is configured such that, after the light's second pass through the polarisation manipulator the DOP of the light output from at least the region of the footprint of light output from the polarisation manipulator that forms the optical signal at the sensor is not more than 0.1, for example not more than 0.05, for instance not more than 0.02. It can be preferred that, after the light's second (e.g. final) pass through the polarisation manipulator, at least the region of the footprint of light output from the polarisation manipulator that forms the optical signal at the sensor, has a substantially balanced mix of different polarisation orientations such that the optical power of the light output from the polarisation manipulator (e.g. optical retarder element) within said region, is substantially equal along orthogonal polarisation axes irrespective of the orientations of the orthogonal polarisation axes.

In an optional, but preferred embodiment of the invention, the polarisation manipulator is configured such that, for a notional division of the region of the footprint of light output from the polarisation manipulator that forms the optical signal at the sensor into a one-dimensional array of n rows of equal width (wherein the width is measured perpendicular to the measuring dimension of the scale), where n is two, the array extending perpendicular to the measuring dimension of the scale, the degree of polarisation of the light output from within each of said n rows, is less than that of the polarised light emitted from the polarised light source. Preferably, the DOP of the light output from within each of said rows is not more than 0.1, for example not more than 0.05, for instance not more than 0.02. Optionally, the optical power of the light output from the polarisation manipulator within each of said n rows, is substantially equal along orthogonal polarisation axes irrespective of the orientations of the orthogonal polarisation axes. N can be any whole number equal to or greater than two. The higher the value of *n* the greater the mix of polarisation states required from the polarisation manipulator, but the harder it can be to practically implement. Accordingly, n is a whole number which is at least two and typically is not more than 50, for example not more than 25.. In a preferred embodiment, n is four, more preferably is six, and especially preferably is eight. The same statements in this paragraph could also be true (additionally or alternatively) for a notional divisional of the region of the footprint of light output from the polarisation manipulator that forms the optical signal at the sensor into a one-dimensional array *of n* rows of equal width, where *n* is two, the array extending *parallel* to the measuring dimension of the scale. In those embodiments in which the light from the polarised light sources passes through the polarisation manipulator twice, preferably the polarisation manipulator is configured such that the requirements of the previous statements in this paragraph are satisfied for both the first and second passes therethrough.

The encoder apparatus can be configured such that: in a dimension perpendicular to the measuring dimension; within the area on the sensor illuminated by light from the polarisation manipulator; and but for any polarisers in the path between the polarisation manipulator and the sensor, the polarisation orientation of light from the polarisation manipulator changes over a length scale smaller than the extent of the sensor by a factor of at least 5, more preferably by a factor of at least 10, especially preferably by a factor of at least 15, for example by a factor of at least 20, for instance by a factor of at least 25.

As mentioned above, said change can be such that the polarisation orientation varies in a periodic manner (e.g. the polarisation state varies according to a repeating design/pattern), but preferably said change is such that the polarisation orientation varies according to a non-repeating design/pattern (in other words, preferably said change is such that the polarisation orientation varies in a non-periodic manner). The actual pitch of the change of the polarisation orientation as it would fall on the sensor, *but for* any polarisers in the path between the polarisation manipulator (e.g. optical retarder element) and the sensor, will depend on the particular geometry of any given system. Nevertheless, in preferred embodiments said pitch is not more than $200\mu$m, for instance not more than $100\mu$m, preferably not more than $50\mu$m, for example not more than $25\mu$m.

Optionally, and in the dimension of said change, the ratio of: a) the pitch of the change in polarisation orientation of light from the polarisation manipulator (e.g. optical retarder element), to b) the size of said illuminated area, is at least 1:25, more preferably at least 1:35.

In the field of optics, the terms "retarder" and "waveplate" are synonymous. Accordingly, another appropriate name for the optical retarder element referred to in this document is: "optical waveplate element". The polarisation manipulator (e.g. optical retarder element) can comprise a birefringent material. Optionally, polarisation manipulator (e.g. optical retarder element) comprise structures configured to provide birefringent-like properties, such as metamaterials. For example, it is known that nanocasting lithography can be used to provide a waveplate.

The fast axis and/or retardance of the polarisation manipulator (e.g. optical retarder element) (and hence the polarisation of light from the optical retarder element) could vary continuously/smoothly. Optionally, the polarisation manipulator (e.g. optical retarder element) comprises discrete sections, or "pixels", of different fast axes and/or different retardances. In those embodiments in which the fast axis and/or retardance (or polarisation of light from the polarisation manipulator/optical retarder element) varies in one dimension only (e.g. in a dimension perpendicular to the measuring dimension), such sections/pixels can be elongated bands, or rows. The sections/pixels/bands/rows can be substantially nominally identical in size, but that does not necessarily have to be the case. Each section/pixel could, for example, comprise a discrete waveplate (or "retarder") portion. Accordingly, a polarisation manipulator (e.g. an optical retarder element) could comprise a series of discrete waveplate portions. Said series could extend in two dimensions, although as mentioned above and as explained in more detail below, it could be preferred that the series extends in one dimension only, said dimension being perpendicular to the measuring dimension. Such waveplate portions could comprise a ½ waveplate, a ¼ waveplate, or a waveplate of a different fraction. In accordance with the above statements that the retardance of the polarisation manipulator (e.g. optical retarder element) can vary, different sections/pixels can have different waveplate fractions.

The readhead could further comprise a diffractive (e.g. Fresnel lens) or refractive (e.g. cylinder/spherical) lens. It can be preferred that the lens is located in the optical path between the light source and the polarisation manipulator, such that the light from the light source hits/passes through the polarisation manipulator for the first time after it has passed through the lens. This can be to avoid adverse diffraction effects.

It can be preferred that the polarisation manipulator is located in the optical path before the scale. In other words, it can be preferred that the light from the light source passes through the polarisation manipulator before it reaches/hits the scale. However, this need not necessarily be the case and the polarisation manipulator could be located in the optical path after the scale. As mentioned above and described in detail below, the polarisation manipulator could be located in the optical path before and after the scale (i.e. such that the light from the light source passes through the polarisation manipulator (e.g. optical retarder element) twice).

The readhead can comprise first and second sensors each configured to detect an optical signal from the scale's position features. The scale's position features can diffract light into multiple diffraction orders. At least one diffraction order can have a polarisation state different to that of at least one other diffraction order. The apparatus can be configured such that by way of the polarisation state of the diffraction orders, the signal sensed by the first sensor is formed from a diffraction order composition that is different to that of the signal sensed by the second sensor.

The scale's series position features could diffract light into multiple diffraction orders. The encoder apparatus could be configured such that at least one diffraction order has a polarisation state different to that of at least one other diffraction order. The polarisation state of the diffraction orders can be imparted/encoded by the scale. Accordingly, the scale can comprise/be a diffraction order encoder. For instance, the scale could comprise a birefringent or hologram scale, such as that described in US Patent Application Publication US2003/0141441, which comprises a polarisation hologram recorded on the scale such that the polarisation orientation of the +/-1$^{st}$ diffraction orders are rotated by 90° relative to the 0$^{th}$ diffraction order.

In preferred embodiments, the readhead comprises a diffraction order encoder which encodes at least one diffraction order produced by the scale's series of position features with a polarisation state different to that of at least one other diffraction order produced by the scale's series of position features. Providing the readhead with a diffraction order encoder can be simpler and cheaper than providing a hologram scale. Further details of such a diffraction order encoder are provided below.

The readhead can be configured to at least partially filter-out at least one diffraction order (e.g. 0$^{th}$ diffraction order), based on its polarisation state so as to at least partially attenuate its influence on the production of the signal sensed by at least one sensor of the readhead.

The readhead can comprise first and second sensors each configured to detect an optical signal from the scale's position features. The readhead can be configured such that, by way of the polarisation state of the diffraction orders, the signal sensed by the first sensor is formed from a diffraction order composition that is different to that of the signal sensed by the second sensor. Such an encoder apparatus can provide improved performance over existing encoder apparatus. In particular, the signals sensed by the different sensors can be tailored as appropriate to provide an improved/optimised signal for each of the different sensors. For instance, whilst it might be beneficial to suppress the 0$^{th}$ diffraction order from contributing to the signal sensed by the first sensor (e.g. which might be an incremental sensor), it might not be beneficial to do so for the second sensor (e.g. which might be a reference mark or absolute sensor). Accordingly, it is not desirable to completely block such diffraction orders from propagating toward the readhead's sensors, and so instead the present invention facilitates selective/bespoke suppression of diffraction orders for the readhead's different sensors, based on their polarisation state. For instance, the 0$^{th}$ diffraction order can have a polarisation state that is different to the +/-1$^{st}$ diffraction order

The diffraction order composition can vary from one sensor to another in the sense that the extent to which the different diffraction orders contribute to/influence the signal as sensed by the sensors is different for the different sensors.

For instance, the signal sensed by the first sensor and the signal sensed by the second could both be formed from the $0^{th}$ and $+/-1^{st}$ diffraction orders, but, due to their polarisation states, the relative influences of the $0^{th}$ and $+/-1^{st}$ diffraction orders on the formation of signal sensed by the first sensor is different to the relative influences of the $0^{th}$ and $+/-1^{st}$ diffraction orders on the formation of signal sensed by the second sensor. For example, the apparatus could be configured such that the influence of the $0^{th}$ diffraction order on the signal sensed by the first sensor is 50% less than the influence of the $0^{th}$ diffraction order on the signal sensed by the second sensor.

Whilst it is possible to obtain some benefit from only partially attenuating the influence of a particular diffraction order (e.g. the $0^{th}$ diffraction order, or the $+/-1^{st}$ diffraction orders) on the production of signal formed at a sensor, e.g. by attenuating the influence the particular diffraction order on the production of the signal by at least 50% as mentioned above, it is often preferable that the influence a particular diffraction order on the production of the signal sensed by a sensor is substantially fully attenuated, e.g. by at least 90%, for example by at least 95%, for instance by at least 98%. In particularly preferred embodiments, the readhead is configured such that one or more particular diffraction orders (e.g. the $0^{th}$ diffraction order, or the $+/-1^{st}$ diffraction orders) has substantially no influence whatsoever on the production of the signal sensed by one of the first and second sensors, whilst its influence of the production of the signal sensed by the other sensor being left unaffected. Indeed, the invention has been found to provide most benefit when select diffraction orders are substantially completely suppressed for at least one of the sensors, whilst being left substantially unsuppressed for the other sensor.

Accordingly, the apparatus can be configured such that the signals sensed by the first and second sensors can be formed/composed from different subsets of the diffraction orders based on their polarisation state. For example, in one embodiment, the signal sensed by the first sensor can be formed from one or more diffraction orders other than the $0^{th}$ diffraction order (i.e. the $0^{th}$ diffraction order does not contribute to the signal sensed by the first sensor), whereas the $0^{th}$ diffraction order does contribute to the signal sensed by the second sensor (optionally along with other diffraction orders).

It is often the case in the field of encoder apparatus that the $0^{th}$ and the $+/-1^{st}$ diffraction orders have the strongest influence on the signals formed at/sensed by the sensor(s). Accordingly, in preferred embodiments of the invention, the $0^{th}$ diffraction order has a different polarisation state to the polarisation state of the $+/-1^{st}$ diffraction orders. This can enable selective control over the extent to which, or whether, the $0^{th}$ and/or $+/-1^{st}$ diffraction orders influence or contribute to the signals sensed by the sensor(s). Although it can be possible to encode the $+1^{st}$ diffraction orders to have a different polarisation state to the $-1^{st}$ diffraction order, typically it is beneficial to configure the readhead such that they have the same polarisation state.

The apparatus could be configured such that the sensor(s) (e.g. the first sensor and/or second sensor) is/are inherently at least partially blind to a particular polarisation state (and therefore inherently at least partially blind to one or more diffraction orders) (e.g. by way of an integrated polariser on the sensor). Accordingly, the composition of the signal as sensed by a sensor is dictated by the extent to which the sensor is at least partially blind to the polarisation state. In preferred embodiments, the encoder apparatus can comprise a sensor filter configured to at least partially (e.g. substantially) filter light based on its polarisation state before it falls on the sensor. For instance, in those embodiments in which the readhead comprises a first sensor and a second sensor, the readhead can comprise a first-sensor filter configured to at least partially (e.g. substantially) filter light based on its polarisation state before it falls on the first sensor and/or a second-sensor filter configured to at least partially (e.g. substantially) filter light based on its polarisation state before it falls on the second sensor. Accordingly, the diffraction orders can be selectively at least partially (e.g. substantially) filtered out by the first-sensor filter and/or second-sensor filter based on their polarisation state. Therefore, the light that falls on the first sensor can be filtered differently to the light that falls on the second sensor. If a first-sensor filter and a second-sensor filter are both provided, they can be configured to at least partially (e.g. substantially) filter out different diffraction orders based on their polarisation states. Accordingly, the composition of the signal as sensed by the first and/or second sensor can be dictated/controlled by said filter(s).

In particularly preferred embodiments, the sensor filter (e.g. the first-sensor filter) prevents substantially all $0^{th}$ diffraction order light from reaching the (e.g. first) sensor (in other words, it substantially filters out the $0^{th}$ diffraction order). In other particularly preferred embodiments, the sensor filter (e.g. the second-sensor filter) prevents substantially all $+/-1^{st}$ diffraction order light from reaching the (e.g. second) sensor (in other words, it substantially filters out the $+/-1^{st}$ diffraction orders). As described in more detail below, in preferred embodiments, diffraction orders greater than the $+/-1^{st}$ diffraction order are substantially suppressed/filtered out/prevented from reaching the sensor(s). Accordingly, in preferred embodiments, the signal formed at the (e.g. first) sensor is formed solely from the $+/-1^{st}$ diffraction orders. In other preferred embodiments, the signal formed at the (e.g. second) sensor is formed solely from the $0^{th}$ diffraction order.

The above-mentioned diffraction order encoder can comprise at least one polariser element configured to encode the at least one diffraction order with a polarisation state different to that of at least one other diffraction order. In particularly preferred embodiments, the diffraction order encoder comprises a first polariser element configured to encode the $0^{th}$ diffraction order with a first polarisation state, and second and third polariser elements configured to encode the $+/-1^{st}$ diffraction orders with a second polarisation state different to the first polarisation state. Optionally, a polariser element comprises a polariser configured to polarise (e.g. increase the degree of polarisation of) at least one diffraction order. Optionally, a polariser element comprises at least one polarisation manipulator, e.g. a waveplate or retarder, configured to change the polarisation state of at least one diffraction order, e.g. configured to rotate the polarisation orientation of said at least one diffraction order. In such a case, the diffraction order(s) will need to be polarised before the diffraction order encoder. For example, a polariser can be placed in the optical path before the waveplate, after the polarisation manipulator. Using a polarisation manipulator to reduce the DOP of the light emitted from a polarised light source, but then re-polarising the light again before it reaches the diffraction order encoder, can be advantageous over simply allowing the raw polarised light from a polarised light source to hit the waveplates of the diffraction order encoder because the polarisation orientation of the polarised light source might be unpredictable/unstable. The polariser located after the polarisation manipulator but before the diffraction order encoder can be used to provide a known, constant polarisation of light.

In the embodiments in which the readhead comprises the diffraction order encoder, the light source and the diffraction order encoder could be provided on a single mount member, in other words a single substrate, for instance a glass substrate.

The readhead can comprise at least one optical relay element for relaying light, e.g. said diffraction orders, from the scale toward the sensor (e.g. the first and second sensors). For instance, the readhead can comprise at least one refractive and/or diffractive optical relay element, e.g. said diffraction orders, from the scale toward the sensor (e.g. the first and second sensors). Suitable optical relay elements include a lens and/or a diffraction grating. The diffraction order encoder could be located to interact with the one or more diffraction orders before the optical relay element (e.g. said diffraction orders) or after the optical relay element (e.g. said diffraction orders). Optionally, the diffraction order encoder and optical relay element (e.g. said diffraction orders) could be one and the same thing (e.g. the at least one optical relay element could comprise the diffraction order encoder integrated within it).

Optionally, the apparatus is configured such that said diffraction orders converge to corresponding/respective spots (or "different points of convergence") in the optical path before the sensor (e.g. the first and second sensors). For instance, there can be a spot/point of convergence for each diffraction order, e.g. a $0^{th}$ diffraction order spot/point of convergence, a $+1^{st}$ diffraction order spot/point of convergence, a $-1^{st}$ diffraction order spot/point of convergence, and so on. Such spots could be located at a focal plane of the optical relay element for relaying the diffraction orders (focal plane of the lens). The diffraction order encoder can be located substantially at those points of convergence. For example, the diffraction order encoder can be located at the focal plane of the optical relay element, for example at the focal plane of the optical relay element. The spots could be formed at a conjugate plane of the light source. Accordingly, the spots could be images of the light source.

The polarisation states of diffraction orders greater than the $+/-1^{st}$ diffraction orders can be configured such that the extent to which, or whether, they influence or contribute to the signal sensed by the first and/or second sensor can be selectively controlled. Such diffraction orders could include, for example the $+/-3^{rd}$ diffraction orders and/or the $+/-5^{th}$ diffraction orders. Alternatively, in some embodiments, many of which are preferred embodiments, the diffraction orders greater than the $+/-1^{st}$ diffraction orders are simply prevented/stopped/blocked from reaching the sensor (e.g. the first and second sensors) such that they have no influence on the signal formed at the sensor (e.g. the first and second sensors). Such diffraction orders could be stopped by way of absorption, deflection, scattering and/or reflection. For instance, opaque material can be located at said above-described spots/points of convergence for select or all diffraction orders greater $+/-1^{st}$ diffraction orders than the at the conjugate plane of the light source so as to absorb and block such diffraction orders. Optionally, the diffraction order encoder is configured to encode diffraction orders greater $+/-1^{st}$ diffraction orders with an polarisation state such that they do not interact/interfere with the $0^{th}$ and/or $+/-1^{st}$ diffraction orders at the sensor (e.g. at the first and second sensors), or such that they are at least partially (e.g. substantially) filtered out by an appropriate filter before they reach the sensor(s) (e.g. are filtered out by the first-sensor filter and/or second-sensor filter).

The scale could be illuminated with collimated light (and optionally the diffraction orders from the scale could themselves be collimated). Optionally, the readhead comprises an optical collimator element for collimating light from the light source. Optionally, the same optical collimator element (for collimating light from the light source) and the optical relay element for relaying the light (e.g. the diffraction orders) toward the sensor (e.g. the first and second sensors) are one and the same thing/optical element. Accordingly, optionally, the same optical element is used for collimating light from the light source and for causing the diffraction orders to converge to corresponding/respective spots.

The apparatus can be configured such that the sensor (e.g. the first and second sensors) is (are) located substantially at a conjugate plane of the scale. Accordingly, the position measurement encoder apparatus could be described as being an imaging encoder apparatus, wherein an image (or pseudo-image) of the scale is formed at the sensor (e.g. the first and second sensors).

Preferably the scale comprises what is commonly referred to as an amplitude scale or "Ronchi" scale (c.f. a phase scale). As will be understood, in an amplitude or "Ronchi" scale, the features are configured to control the amplitude of light reflected (or transmitted in a transmission scale embodiment) toward the readhead (in particular towards its first and second sensor), e.g. by selectively absorbing, scattering and/or reflecting the light. In contrast a phase scale configured to control the phase of the light reflected (or transmitted in a transmission scale embodiment) toward the readhead (in particular towards its first and second sensor), e.g. by having scale features of different depths controlled to less than a fraction of the wavelength of the light. Typically, amplitude scale produces significant $0^{th}$ diffraction order along with significant +/-1$^{st}$ diffraction orders (plus higher +/- odd diffraction orders of decreasing intensity), which is in contrast to phase scale which does not produce any $0^{th}$ diffraction order.

Optionally, the period of the scale is not more than 40 $\mu$m, preferably not more than 20 $\mu$m, for instance not more than 10$\mu$m, for example approximately 8 $\mu$m.

Preferably, the scale comprises a feature-space (or "mark"-space) ratio of 1:1. Accordingly, in other words, the ratio of the width of the scale features to their spacing) of the scale is 1:1.

The scale could be a transmissive scale. Preferably the scale is a reflective scale. Accordingly, preferably the light source and the first and second sensors of the readhead are located on the same side of the scale.

Optionally, the position measurement encoder apparatus is a one-grating encoder system, wherein the scale comprises the only diffraction grating in the optical path between the light source and the first and second sensors.

The scale's series of position features could be provided in at least one track (a "scale track"). The scale could comprise one or more scale tracks.

The signal produced at the sensor can comprise an incremental position signal, for instance an interference fringe pattern or modulated spots. Accordingly, the sensor can comprise an incremental position sensor. The period of the fringe could be M.p/2, where M is the magnification factor of the encoder's optical system, and p is the period of the scale (this is the case/can be achieved when the $0^{th}$ diffraction order has been substantially removed). The scale can comprise an incremental scale track, comprising a series of periodic features defining an incremental scale track. One or more reference marks can be provided, embedded within and/or located adjacent the incremental scale track. Such a reference mark can comprise an optical reference mark. Accordingly, optionally the signal produced at the sensor can comprise a reference mark signal. In those embodiments in which the readhead comprises first and second sensors, the second sensor can be configured to detect the reference mark signal produced by the reference mark.

Optionally, the signal produced at the sensor comprises an absolute position signal. Accordingly, the sensor can comprise an absolute position sensor. Accordingly, the scale can comprise an absolute scale track, comprising a series of features defining an absolute scale track. As will be understood, an absolute scale track differs to an incremental scale track (with or without reference marks) in that its features define a series of unique positions along the length of the scale which can be readhead by the readhead such the relative position of the readhead and scale can be determined (e.g. on start-up) at any position along the scale without requiring movement to a reference position (e.g. a reference mark). Examples of absolute scales include those described in US Patents US7499827 and US5279044. The scale could comprise separate incremental and absolute scale tracks. Optionally, the incremental and absolute scale features are combined in one track. For instance, the absolute scale features could be superimposed on the periodic incremental scale features. In those embodiments in which the readhead comprises first and second sensors the first sensor could be configured to detect an incremental scale/signal (and so could be referred to as an incremental sensor) and the second sensor could be configured to detect an absolute scale/signal (and so could be referred to as an absolute sensor). As is known, and as is explained in the prior art referred to above in this paragraph, absolute position information can be encoded in a scale track by omitting select position features from an otherwise periodic series of position features.

Optionally, the scale comprises a first and a second series of position features which are readable by the readhead. The first series of position features can produce a first set of diffraction orders and the second series of position features can produce a second set of diffraction orders (which produce said signals detected by the first and second sensors). These first and second sets of diffraction orders can be superimposed on each other/spatially overlapping. The position measurement encoder apparatus could be configured such that only one of the first and second sets of diffraction orders has diffraction orders having different optical states. For example, the position encoder apparatus could be configured such that at least one diffraction order (e.g. the $0^{th}$ diffraction order) of the first set of diffraction orders has an optical state different to that of at least one other diffraction order (e.g. the +/-1$^{st}$ diffraction order) of the first set of diffraction orders, but the diffraction orders (e.g. at least the $0^{th}$ and +/-1$^{st}$ diffraction orders) of the second set of diffraction orders could have the same optical state. Alternatively, the position measurement encoder apparatus could be configured such that at least one diffraction order of the first set of diffraction orders has an optical state different to that of at least one other diffraction order, and such that at least one diffraction order of the second set of diffraction orders has an optical state different to that of at least one other diffraction order. Either way, as will be understood, the first and second sets of diffraction orders can be filtered differently based on their optical states.

The first and/or second series of position features can be periodic (in other words, the scale can comprise a first periodic series of position features and a second periodic series of position features). The period of the first series of position features can be different to the period of the second series of position features. For instance, the scale can comprise a scale track comprising a first series of position features having a first period (e.g. a relatively fine period) and a second series of position features having a second period (e.g. a relatively coarse period, i.e. coarser than the period of the first period). The first and/or second series of position features can be provided in the same track, i.e. embedded within each other/superimposed on each other.

As will be understood, the output of the first sensor (and the output of the second sensor if present) can provide one or more signals which can be used to indicate relative position information (concerning the readhead and scale). As explained in more detail later in this document, such position information can be incremental or absolute position information. Such position information can be an index (also known as a "reference", or "datum") position information. The position information could be linear position information or angular position information (e.g. in the case of a rotary encoder apparatus). The readhead could output the raw, unprocessed signal(s) from the sensor(s). Optionally, the readhead can process the signal(s) from the sensor(s) and output one or more signals derived from the signal(s) from the sensor(s). As is commonly the case with position encoders, the readhead can output sin and cos signals (commonly referred to as "quadrature" signals) which change with a change in the relative position (i.e. which change with relative motion) of the scale and readhead. The readhead could output analogue or digital signals representative of the relative position of the scale and readhead. For instance, the quadrature signals could be analogue or digital quadrature signals. Optionally, the readhead can maintain and output an incremental "count" of the position of the readhead and scale (e.g. which could be counted from an index position). Optionally, the readhead can output digital codewords representative of the relative position of the scale and readhead. For example, the readhead can output absolute digital codewords representative of the absolute relative position of the scale and readhead. As will also be understood, a controller can use the output of the readhead to determine how to control the apparatus/device on which the encoder apparatus is installed.

The position measurement encoder apparatus could be a linear encoder or a rotary encoder apparatus. Accordingly, the scale could be a linear scale or a rotary scale (in which case the scale could be a ring scale or disc scale).

The position measurement encoder apparatus could be a linear encoder apparatus or a rotary encoder apparatus. Accordingly, the scale could be a linear scale or a rotary scale (in which case the scale could be a ring scale or disc scale).

As will be understood, the output of the first sensor (and of the second sensor if present) can provide one or more signals which can be used to indicate relative position information (concerning the readhead and scale). As explained in more detail later in this document, such position information can be incremental or absolute position information. Such position information can be an index (also known as a "reference", or "datum") position information. The position information could be linear position information or angular position information (e.g. in the case of a rotary encoder apparatus). The readhead could output the raw, unprocessed signal(s) from the sensor(s). Optionally, the readhead can process the signal(s) from the sensor(s) and output one or more signals derived from the signal(s) from the sensor(s). As is commonly the case with position encoders, the readhead can output sin and cos signals (commonly referred to as "quadrature" signals) which change with a change in the relative position (i.e. which change with relative motion) of the scale and readhead. The readhead could output analogue or digital signals representative of the relative position of the scale and readhead. For instance, the quadrature signals could be analogue or digital quadrature signals. Optionally, the readhead can maintain and output an incremental "count" of the position of the readhead and scale (e.g. which could be counted from an index position). Optionally, the readhead can output digital codewords representative of the relative position of the scale and readhead. For example, the readhead can output absolute digital codewords representative of the absolute relative position of the scale and readhead. As will also be understood, a controller can use the output of the readhead to determine how to control the apparatus/device on which the encoder apparatus is installed.

According to a second aspect of the invention there is provided an encoder apparatus comprising:

a scale comprising a series of position features, the series extending in a measuring dimension;
a readhead comprising:

i. a polarised light source for emitting polarised light toward the scale;
ii. a sensor configured to detect an optical signal from the scale's position features;

an optical retarder element, located in the optical path between the polarised light source and the sensor, having a fast axis and/or a retardance that is non-uniform along at least one-dimension, configured such that regardless of the predominant input polarisation orientation of the footprint of light hitting the optical retarder element, the light output from the optical retarder element has a mix of polarisation orientations across its footprint/extent. The features described above in connection with the first aspect of the invention are also applicable to this second aspect of the invention.

Embodiments of the invention will now be described, by way of example only, with reference to the following drawings, in which:

Figures 1a and 1b are schematic diagrams, illustrating the optical workings of a generic prior art position encoder system;

Figure 2 illustrates an incremental scale and a readhead of an encoder apparatus according to the present invention;

Figure 3 schematically illustrates the various optical components located within the readhead of Figure 2 according to a first embodiment of the invention;

Figure 4(a) illustrates an example electrograting sensor for use in the readhead of Figures 2 to 5;

Figure 4(b) schematically illustrates bands of light having different polarisation falling on the incremental sensor of Figure 4(a);

Figure 5(a) illustrates example reference mark signals from the reference mark photodiodes of the readhead of Figures 2 and 3, and Figure 5(b) illustrates a difference signal obtained therefrom;

Figure 6(a) illustrates an example polarisation manipulator for use in a readhead according to the present invention;

Figure 6(b) shows four different (i-iv) example orientations of orthogonal polarisation axes (v, h) and a graph of the optical power along those orthogonal polarisation axes of the light output from the polarisation manipulator of Figure 6(a) within the footprint of light;

Figure 7 schematically illustrates an encoder apparatus according to a second embodiment of the invention;

Figures 8 and 9 are schematic optical diagrams of the encoder apparatus of Figure 7;

Figure 10 is a graph illustrating the effect the $0^{th}$ order has on the visibility of the fringes falling on the sensor as the distance between the scale and the readhead changes;

Figure 11 schematically illustrates an encoder apparatus according to a third embodiment of the invention;

Figures 12 and 13 are schematic optical diagrams of the encoder apparatus of Figure 11;

Figure 14 illustrates an example polarisation manipulator for use in a readhead according to the present invention;

Figures 15 and 16 are graphs illustrating the effect of filtering out the +/-$1^{st}$ diffraction orders on the image (or "pseudo-image") at the readhead's detector plane;

Figure 17 schematically illustrates a magnified view of a small section of incremental scale features;

Figure 18 schematically illustrates a schematic optical diagram of an encoder apparatus according to another embodiment of the present invention; and

Figure 19 schematically illustrates an absolute scale and readhead of an encoder apparatus according to another embodiment of the present invention;

Figure 20 schematically illustrates an absolute scale and readhead of an encoder apparatus according to another embodiment of the present invention; and

Figure 21 illustrates a scale and readhead of an encoder apparatus according to another embodiment of the present invention.

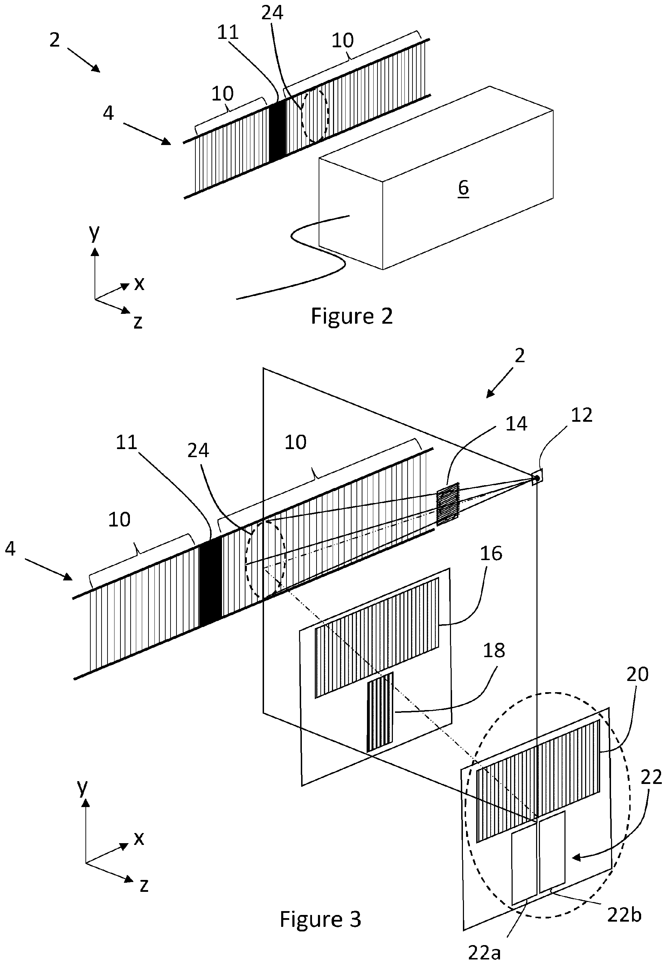

Referring to Figure 2, an encoder apparatus 2 according to the present invention comprises a scale 4 and a readhead 6. The readhead 6 is moveable in the X-dimension relative to the scale 4 (although it could be the other way around, or indeed both could be moveable). For example, the scale 4 could be mounted to a stationary part of a machine (not shown) and the readhead 6 mounted to a moveable part of a machine (not shown). The scale 4 could take many different forms, including for example linear scale as illustrated or rotary scale (e.g. provided on a ring wherein the scale features are provided on its circumferential edge, or on a disc wherein the scale features are provided on its planar face).

In the embodiment described, the scale 4 is an amplitude scale (in that it controls the amplitude of light leaving the scale toward the readhead) and comprises a substrate which has incremental features 10 in the form of periodic dark/relatively non-reflective lines made on an otherwise relatively reflective substrate such that between the incremental features 10 the scale is relatively reflective. Of course, the scale's incremental features 10 could be made in other ways, such as for example by forming relatively reflective lines on an otherwise relatively non-reflective substrate, or even by forming both the relatively reflective and non-reflective lines on a substrate. As will also be understood, the incremental features 10 could be provided in other ways, for example, the scale's incremental features 10 could be provided in the form of reflective facets or lines which reflect the light toward and away from the readhead. In the embodiment described, the scale's substrate is metal, although as will be understood other materials such as glass for instance could be used.

The scale 4 could be a phase scale, in which peaks and pits in the scale modulate the phase of light leaving the scale toward the readhead. However, as will become apparent throughout the rest of this specification, the present invention has been found to be particularly useful when used in connection with amplitude scale rather than phase scale, due to the presence of a $0^{th}$ diffraction order produced by amplitude scale (whereas the $0^{th}$ diffraction order does not tend to be produced by a phase scale).

The incremental features 10 form the incremental scale facilitating measurement along the X axis (the "measurement dimension"). In the embodiment shown, a reference mark 11 is provided, and in particular is embedded within the incremental features 10. In the embodiment described, the reference mark comprises a single continuous block, formed by the omission of a plurality of successive reflective lines. As will be understood, the reference mark need not necessarily be embedded within the incremental scale track. Instead, it could be provided in a separate track. In other embodiments, the reference mark is nonoptical, or for instance not provided at all.

Figure 3 illustrates the various optical components located within the readhead 6 (for the sake of clarity, the body has been omitted, and the relative size and positions of the components are not to scale). In this embodiment, the readhead comprises a polarised light source 12, a polarisation manipulator 14 (which as explained in more detail below in this embodiment is an optical retarder element, also referred to herein as a "non-uniform retarder" or "patterned retarder"), a diffraction grating 16, an optical imaging element 18, a primary position information sensor 20, and a secondary position information sensor 22.

As mentioned earlier in this document, the use of the terms "pattern" and "patterned" in this document, especially in connection with the polarisation manipulator, is not intended to imply that the presence of any sort of repeating configuration. Rather, the terms "pattern" and "patterned" are used to confer that the polarisation manipulator, e.g. the retarder, has a non-uniform design/form.

Except for the use of a polarised light source 12 and the optical retarder element 14, the configuration and operation of the encoder according to this embodiment is substantially identical to that described in WO2005124282. Accordingly, putting the optical retarder element 14 to one side for the moment, light from the light source 12 illuminates a region 24 of the scale 4. Owing to the periodic arrangement of the incremental features 10, the light reflected by the incremental features 10 are diffracted into diffraction orders (i.e. in the same way as that described above in connection with Figures 1a, 1b). The diffracted light hits the diffraction grating 16, where the light is diffracted into further diffraction orders, which recombine at the primary position information sensor 20 (hereinafter referred to as the "incremental sensor" 20) to form an interference fringe pattern (or "fringe field") thereon. Movement of the readhead 6 relative to the scale 4 causes movement of the interference fringes relative to the incremental sensor 20 thus producing an up/down count which enables a measurement of displacement.

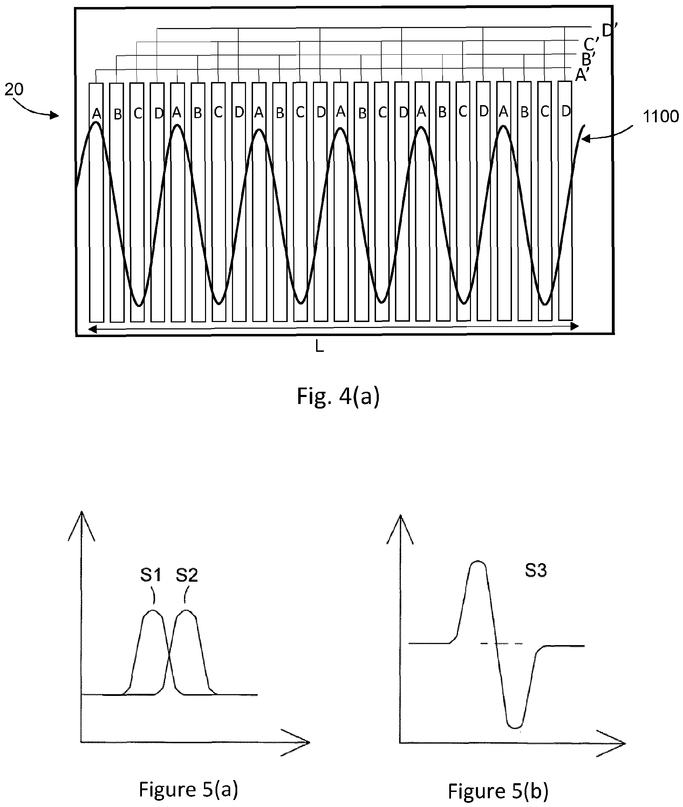

In the embodiment described, the incremental sensor 20 is in the form of an electrograting, which in other words is a photo-sensor array which comprises two or more sets of interdigitated/interlaced/interleaved photo-sensitive sensor elements (also referred to herein as "photodetectors" or "fingers"). Each set can, for example, detect a different phase of the interference fringe pattern/field (schematically represented by wave 1100) at the incremental sensor 20. An example of an electrograting is illustrated in Figure 4(a), in which a part of an electrograting is shown, and in which the fingers/photodiodes of four sets of photodiodes (A, B, C and D) are interdigitated/interleaved to form an array of sensor elements extending along the length "L" of the sensor.

The output from each finger/photodiode in a set is combined to provide a single output, thereby resulting in four channel outputs: A', B', C' and D'. These outputs are then used to obtain the quadrature signals SIN and COS. In particular, A'-C' is used to provide a first signal (SIN) and B'-D' is used to provide a second signal (COS) which is 90 degrees out of phase from the first signal. Although in the specific embodiment the electrograting comprises four sets of photodiodes providing four the channels A', B', C' and D', this need not necessarily be the case. For example, the electrograting could comprise two sets of photodiodes providing just two channels A' and B'.

As will be understood, other types of sensor could be used instead of the above described electrograting. For example, in embodiments in which modulated spots are created by the readhead's optical system instead of an interference fringe pattern, bulk sensor photodiodes could be used to detect the intensity of the modulated spots (e.g. as described in US4776701). Similar to a system which produces an interference fringe pattern, in a system which produces modulated spots, encoding the $0^{th}$ and +/-$1^{st}$ diffraction orders such that they do not interfere with each other at the sensor effectively doubles the resolution of the encoder system (in that the intensity of the spots modulate with a frequency of p/2). Similarly, encoding the diffraction orders higher than the +/-1st diffraction orders with an optical state different to the +/-1st diffraction orders reduces/removes, harmonics on the modulated spot intensity.

The polarised light source 12 emits polarised light, i.e. light having at least a predominant, if not sole, polarisation orientation. The polarised light source could comprise a linearly polarised light source, or a circular or elliptical polarised light source. In this embodiment, the polarised light source 12 comprises a laser light source, in particular a VCSEL, which emits linearly polarised light, having a predominate polarisation orientation. As will be understood, the polarisation orientation and/or degree of polarisation (DOP) of light from a laser light source such as a VCSEL can vary unpredictably from one light source to another. Also, the polarisation orientation and/or the DOP of the light from a laser light source such as a VCSEL can change during the operation of the readhead 6, for example due to a change in operating environment such as a change in temperature and applied current (which could change due to servoing). Typically, the DOP of the type of VCSEL used in the embodiment described will be in the region of 0.3 to 0.7.

When the readhead 6 passes over the reference mark 11 a change in the intensity of light reflected by the scale 4 is imaged by the optical imaging element lens 18 onto the secondary position information sensor 22 (hereinafter referred to as the "reference mark sensor"). The secondary position information sensor 22 comprises a split detector comprising first 22a and second 22b photodiodes onto which light from the scale 4 is imaged. Figure 5(a) schematically illustrates the outputs (S1, S2) from the first 22a and second 22b photodiodes as the readhead 6 moves along the scale 4 and passes over the reference mark 11. Signals S1 and S2 from the first 22a and second 22b photodiodes are subtracted to form a difference signal S3 shown in Figure 5(b). The position of the reference mark can be determined by identifying where the falling edge of signal S3 crosses a known threshold in the reading direction shown. As will be understood, although in this embodiment a split detector is used to detect the reference mark, other types of detector, and/or other techniques for identifying the presence of the reference mark may be used. The optical imaging element 18 illustrated in Figure 3 is a Fresnel Zone Plate. However other types of optical imaging element having the same optical function may be used, for example a refractive lens. As described in, WO2005124282, the reference mark sensor 22 could be partially, or fully embedded within the incremental sensor 20 (and similarly the optical imaging element 18 could be partially or fully embedded within the diffraction grating 16).

As mentioned above, the VCSEL 12 emits polarised light. The inventors have identified that the polarisation of the light used to illuminate the scale can in some circumstances adversely affect the optical signals formed at the sensors 20, 22. For instance, high pitch scales (e.g. where the pitch of the features is less than 1 $\mu$m) can exhibit birefringence and therefore can be sensitive to the polarisation of the light hitting the scale. Furthermore, holographic scales can also be polarisation sensitive. Therefore, reducing the DOP of the light from the VCSEL can be beneficial, especially if the polarisation orientation of the light source is not stable (e.g. as is the case with a VCSEL) and can change over time which can make it difficult, if not impossible, to calibrate/map-out errors caused by the polarisation orientation. Whilst laser light sources (such as edge emitting laser light sources) with a fixed polarisation orientation are known, the present invention enables to the use of light sources with non-stable polarisation orientations, such as VCSELs, which can be cheaper, more reliable, easier to package, less power hungry, and/or provide a more symmetric spatial profile, than edge emitting laser light sources.

Accordingly, as shown in Figure 3, in accordance with the present invention, an optical retarder element 14 which reduces the DOP of the light from the VCSEL 12, is arranged in the optical path between the VCSEL 12 and the sensors 20, 22. In the particular embodiment described, the optical retarder element 14 is located in the optical path before the light interacts with any diffractive optical components in the optical system, such as the scale 4.

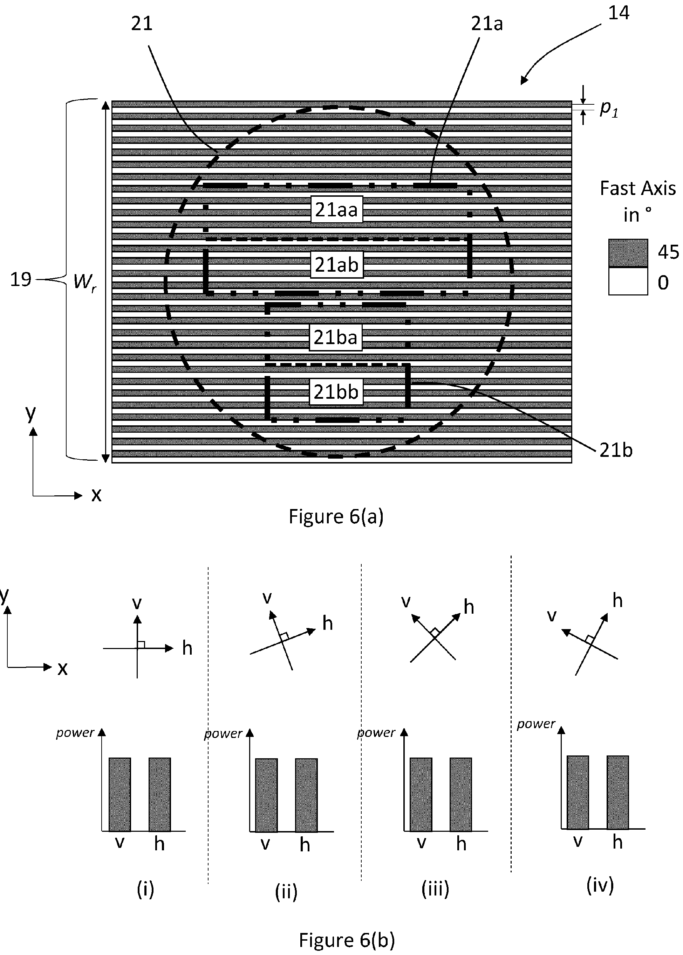

In accordance with the present invention, the optical retarder element 14 comprises a half-waveplate having a non-uniform fast axis along at least one dimension. An example optical retarder element 14 is illustrated in more detail in Figure 6(a). In this embodiment, the optical retarder element 14 comprises a non-uniform fast axis along the Y-dimension, which is orthogonal to the encoder's measuring dimension (X) (and therefore could be described as being a "non-uniform retarder" or "patterned retarder"). In particular, the optical retarder element 14 comprises an array of discrete elongated half-waveplate pixels/rows 19, wherein the array extends in the Y-dimension, and the elongate length of the pixels/rows extends in the X-dimension. Accordingly, the array/series of pixels extends perpendicular to the measuring dimension (X) of the scale 4. Accordingly, in this embodiment the optical retarder element (also referred to as the non-uniform/patterned retarder) 14 does not comprise any structure in the measuring (X) dimension. This can be advantageous so as to prevent the non-uniform/patterned retarder 14 being a source of diffraction of light in the X-dimension, which could otherwise adversely interfere with the generation of the optical signal at the sensors 20, 22. However, as will be understood, in other embodiments/applications, such diffraction might be tolerable and therefore the non-uniform/patterned retarder could comprise structure in the X-dimension, e.g. it could be arranged such that the array/series of retarder pixels extends along the Y-dimension, or the non-uniform/patterned retarder could comprise a two dimensional array of retarder pixels.

As shown in Figure 6(a), the half-waveplate pixels 19 are arranged with alternating fast axes of 0° and 45°. Such a configuration ensures that regardless of the predominant input polarisation orientation of the footprint 21 of light hitting the optical retarder element, the light output from the optical retarder element 14 will have a mix of polarisation orientations across its extent/footprint (in the Y-dimension) such that the DOP of the light leaving the optical retarder element 14 will be less than the DOP of the light hitting the optical retarder element 14. In particular, in this embodiment, the light output from the optical retarder element 14 will comprise (in the Y-dimension) alternating sections/portions/rows of light having two different polarisation orientations that are always orthogonal to each other, regardless of the predominant input polarisation orientation. Furthermore, in the embodiment described, the light output from the optical retarder element 14 will comprise a balanced mix of polarisation orientations (e.g. in this embodiment there will be substantially equal amounts of the two different orthogonal polarisation orientations).

Accordingly, the optical retarder element 14 is configured such that the optical power (e.g. in milliwatts, "$mW$") of the light within the footprint of light 21 output from the optical retarder element will be substantially equal along orthogonal polarisation axes, irrespective of the orientation of the orthogonal polarisation axes (accordingly, the DOP of the footprint of light 21 output from the optical retarder element will be close to 0, e.g. not more than 0.1, and preferably not more than 0.02). This can be beneficial for reasons of balance and consistency of performance of the encoder. For example, if the optical power along one polarisation axis is substantially greater than that of another orthogonal polarisation axis, the effects of polarisation on the encoder performance might not suppressed as much as a configuration where the optical powers of the light along orthogonal polarisation axes were substantially the same, especially if their respective powers changed with a change in the input polarisation orientation.

With reference to Figure 6(b) there are shown four different (i-iv) example orientations of orthogonal polarisation axes (v, h) and a graph of the optical power along those orthogonal polarisation axes of the light output from the optical retarder element within the footprint of light 21. As shown, due to the substantially balanced mix of polarisation orientations output by the optical retarder element (also referred to as the non-uniform/patterned retarder) 14 within the footprint of light 21, for any pair of orthogonal polarisation axes, the optical power along each of the polarisation axis is substantially the same irrespective of the orientations of the orthogonal polarisation axes. In other words, within the footprint of light 21 output from the optical retarder element, if the light output from the optical retarder element were polarised along a first polarisation axis, the optical power of the polarised light would be substantially the same as the optical power of light if it were instead polarised along a second polarisation axis that is orthogonal to the first polarisation axis.

The optical retarder element is configured such that, within at least the region of the footprint of light output from the optical retarder element that forms the optical signal at the sensor, and regardless of the predominant input polarisation orientation of the light hitting the optical retarder element, the difference in the optical powers along orthogonal polarisation axes of the output beam is at least half that of the input beam, irrespective of the orientations of the orthogonal polarisation axes.

In the embodiments described herein, substantially equal (or "substantially the same") optical powers along the orthogonal polarisation axes means that the difference in optical power along the orthogonal polarisation axes varies by no more than 2% of the total power. Accordingly, in such a case the DOP of the light output from the optical retarder element within the footprint of light 21 is not more than 0.02 or 2%. However, as will be understood, in other embodiments, such a tight tolerance might not be required and so substantially equal (or "substantially the same") optical powers of the light along the orthogonal polarisation axes could mean that the difference in optical power along the orthogonal polarisation axes varies by no more than 5% of the total power, for instance varies by no more than 10% of the total power, for example varies by no more than 20% of the total power. In other words, the optical retarder element could be configured such that the DOP of light output from the optical retarder element within the footprint of light 21 is not more than 0.05 (or 5%), for instance not more than 0.1 (or 10%), for example not more than 0.2 (or 20%).

As shown in Figure 6(a), the pitch $p$ of the half-waveplate pixels 19 is substantially smaller than the width of the optical retarder element 14 in the Y-dimension. In particular, although it is possible that the optical retarder element 14 only comprises two pixels (such that a first half of the light output therefrom has one polarisation orientation and a second half of the light output therefrom has a different, orthogonal polarisation orientation), it has been found beneficial to provide the optical retarder element 14 with a substantially higher number of half-waveplate pixels 19 so as to spread the different polarisation orientations across the footprint of light output from the optical retarder element 14, and therefore across the scale features on the scale 4 (rather than the same or similar polarisation orientations all being grouped to one side). This can be beneficial for a number of reasons, including providing greater freedom for where the sensors can be positioned along the Y-dimension and still receive the benefit of the invention. In this embodiment, this is achieved by providing the optical retarder element (also referred to as the non-uniform/patterned retarder) 14 with a plurality of half-waveplate pixels 19 of alternating fast axes. In particular the ratio of the pitch $p_1$ of the half-waveplate pixels 19 to the width $Wr$ of the optical retarder element 14 (in the dimension along which the series of pixels extend - in this embodiment along the Y-dimension) is at least 1:4, more preferably at least 1: 10, especially preferably at least 1:20, for example at least 1:30.

Note that in this embodiment the arrangement of the half-waveplate pixels 19 is such that the above statements about the optical power along orthogonal polarisation axes of the light output from the optical retarder element within the footprint of light 21 being substantially the same (and the statements about the DOP of the light output from the optical retarder element within the footprint of light 21 being below a certain level), is also true for the region 21a of the footprint of light output from the optical retarder element that forms the optical signal at the incremental sensor 20, and it is also true for the region 21b of the footprint of light output from the optical retarder element that forms the optical signal at the reference mark sensor 22. Accordingly, it is assured that the light falling on the incremental 20 and reference mark 22 sensors will comprise a balanced mix of polarisation orientations. Accordingly, in the embodiment described, the graphs (I to iv) of Figure 6(b) equally apply to the region 21a of the footprint of light output from the optical retarder element that forms the optical signal at the incremental sensor 20, and also equally apply to the region 21b of the footprint of light output from the optical retarder element that forms the optical signal at the reference mark sensor 22.

Further still, in the embodiment described, the optical retarder element 14 is configured such that the different polarisation orientations output within the region 21a are substantially evenly distributed in Y-dimension (i.e. perpendicular to the measuring dimension X), such that, for a notional division of the region into a one-dimensional array of two rows (21aa and 21ab) of equal width, the array extending parallel to the Y dimension, the optical power along orthogonal polarisation axes of the light output from the optical retarder element within each of said two rows as, is substantially equal irrespective of the orientations of the orthogonal polarisation axes. Note that this is also the case for the region 21b of the footprint of light output from the optical retarder element that forms the optical signal at the reference mark sensor 22 (e.g. for a notional division of the region into a one-dimensional array of two rows 21ba and 21bb of equal width, the array extending parallel to the Y dimension, the optical power along orthogonal polarisation axes of the light output from the optical retarder element within each of said n rows as, is substantially equal irrespective of the orientations of the orthogonal polarisation axes). Accordingly, the graphs (i to iv) of Figure 6(b) (and the above statements about the DOP of the light output from the optical retarder element within the footprint of light 21 being below a certain level) equally apply to each of the rows 21aa and 21ab of the region 21a of the footprint of light output from the optical retarder element that forms the optical signal at the incremental sensor 20, and also equally apply to each of the rows 21ba and 21bb of the region 21b of the footprint of light output from the optical retarder element that forms the optical signal at the reference mark sensor 22. Such a configuration can help to suppress errors that might otherwise be caused by imperfections of the scale features along their lengths. Furthermore, uniform illumination across the sensor can be beneficial. For example, the sensor could be shaped/windowed/weighted to improve the signal output by the sensor, e.g. as described in US 10670431, and uniform illumination can be needed to maintain the benefit/effect of the shape/window/weighting.

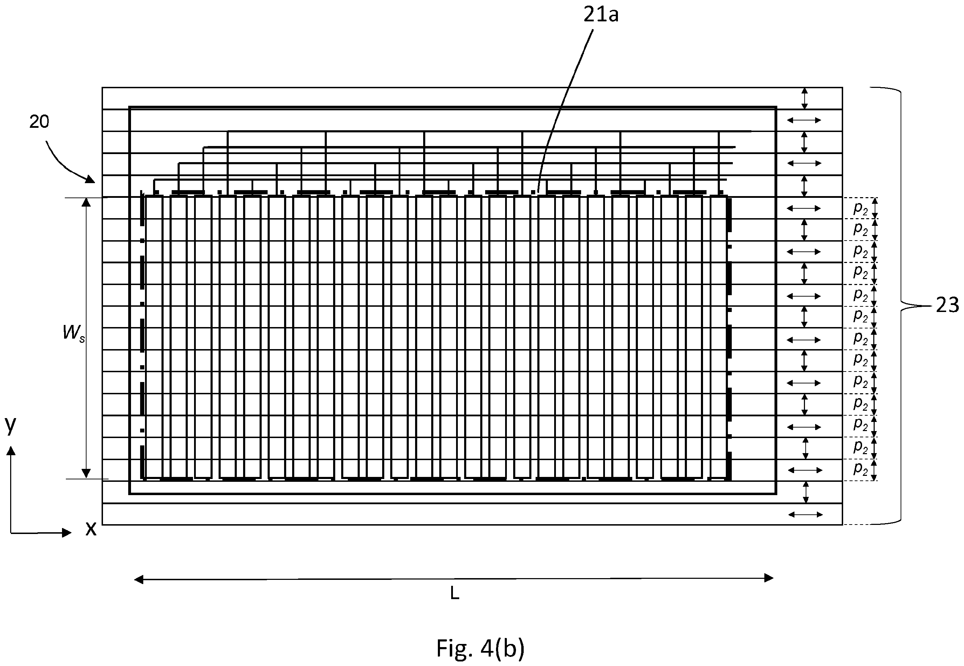

Figure 4(b) (which is similar to Figure 4(a) in that it shows a part of an incremental sensor 20, in this case in the form of an electrograting), schematically illustrates the bands 23 of light having different polarisation falling on the incremental sensor 20 (the polarisation of each band of light falling in the sensor is illustrated by the arrows). As is schematically shown, in a dimension perpendicular to the measuring dimension (i.e. in the dimension Y which is perpendicular to the measuring dimension X), the pitch $p_2$ of the change in polarisation orientation of light falling on the incremental sensor 20 is substantially smaller than the width $W_s$ of the incremental sensor 20. This can be beneficial because such an arrangement can help to suppress errors that might otherwise be caused by imperfections of the scale features along their lengths, by spreading the different polarisation orientations across the lengths of the features. In the particular embodiment shown, the ratio of a) the pitch of the change in polarisation orientation of light from the optical retarder element, to b) the size of said illuminated area, is between 1:7 and 1:8. In some preferred embodiments, the ratio can be much greater, for instance at least 1:25, but for the sake of ease and clarity of illustration a much lower ratio is illustrated in Figure 4(b).

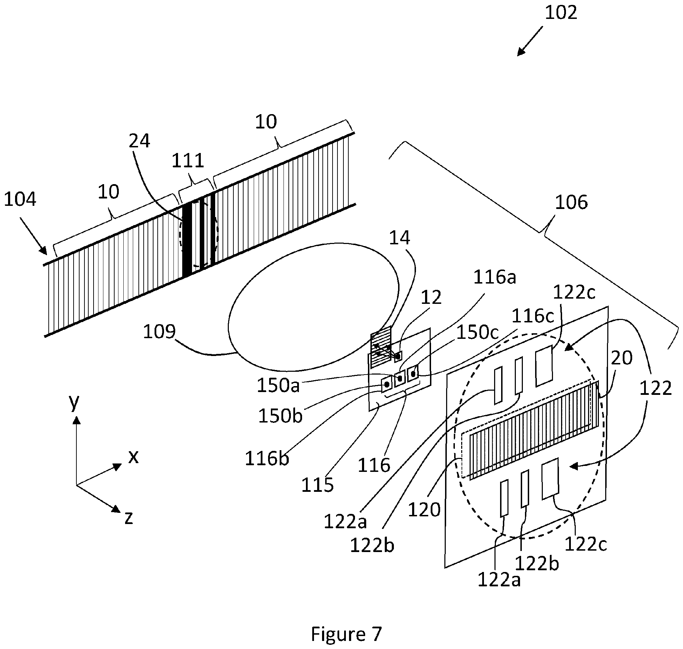

An alternative embodiment of an encoder apparatus 102 according to the present invention will now be described with reference to Figures 7 to 9. This embodiment shares some parts which are identical to the embodiment of Figure 3 and like parts share the same reference numeral.

Differences to the embodiment of Figure 3 include that the diffraction grating and Fresnel Zone Plate of the embodiment of Figure 3 are omitted, and an imaging optic, in the form of a refractive lens 109 is provided. Furthermore, a diffraction order encoder 116 is provided. The light source 12 and diffraction order encoder 116 are provided in substantially the same plane, on an opaque substate 115. As will by understood, this substrate 115 area does not actually need to be opaque, but being opaque means that the other diffraction orders are blocked which can be beneficial. Further differences include that, unlike the continuous reference mark 11 of Figure 3, the reference mark 111 of this embodiment comprises a patterned reference mark, which in this embodiment comprises one thick dark band, and two thin dark bands, each separated along the measuring direction by at least one incremental feature between them. The term "patterned" in the expression "patterned reference mark" is not being used to imply that the reference mark has a repeating design/form, but rather is being used to confer that the reference mark has a non-uniform design/form. Of course, the "patterned reference mark" could have a repeating form/design, or may not have a repeating form/design. The reference mark sensor 122 comprises two sets of correspondingly arranged and shaped/sized photodiodes 122a, 122b, 122c, located on opposing sides of the incremental sensor 20. Each of the sets of photodiodes 122a, 122b, 122c of the reference mark sensor 122 are configured such that, when, and only when, the readhead 106 and reference mark 111 are aligned, an image (or "pseudo-image"-- explained in more detail below) of the reference mark 111 pattern falls on, and lines up/correlates with the pattern of the three photodiodes 122a, 122b, 122c of the reference mark sensor 122, thereby causing a significant and sharp change in intensity of light falling thereon. In this embodiment, wherein the reference mark 111 comprises dark bands, there will be a significant drop in the intensity of light received at the reference mark sensor 122 when the readhead 106 and reference mark 111 are aligned. Signal processing electronics and/or software downstream of the reference mark sensor 122 can be configured to identify such a change in intensity of light received at the reference mark sensor 122 and output a signal indicating the presence of the reference mark. As far as the downstream signal processing electronics and/or software is concerned, the two sets of correspondingly arranged photodiodes 122a, 122b, 122c act as one photodiode.

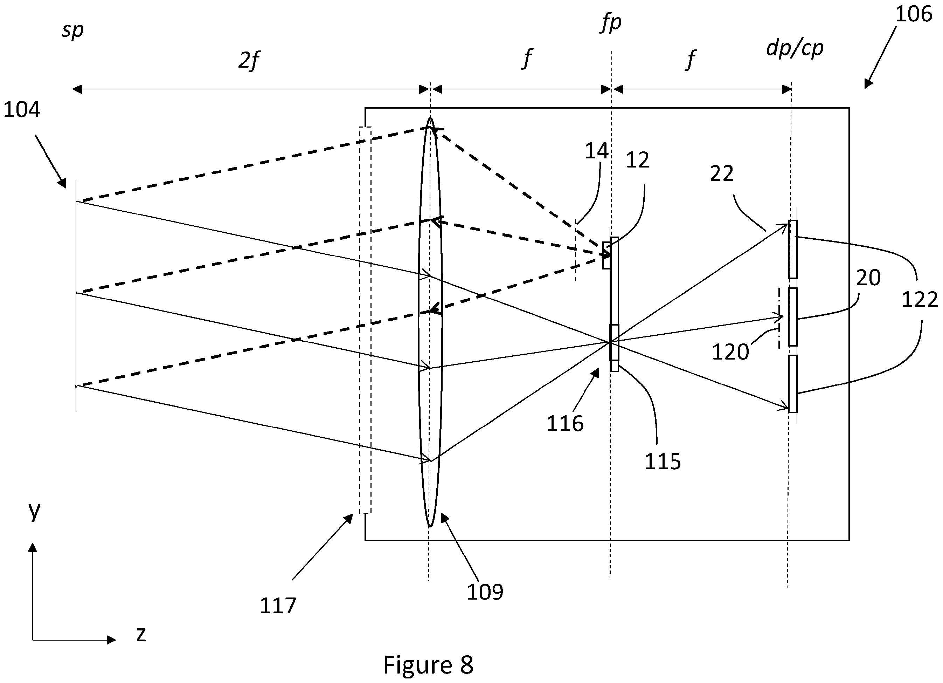

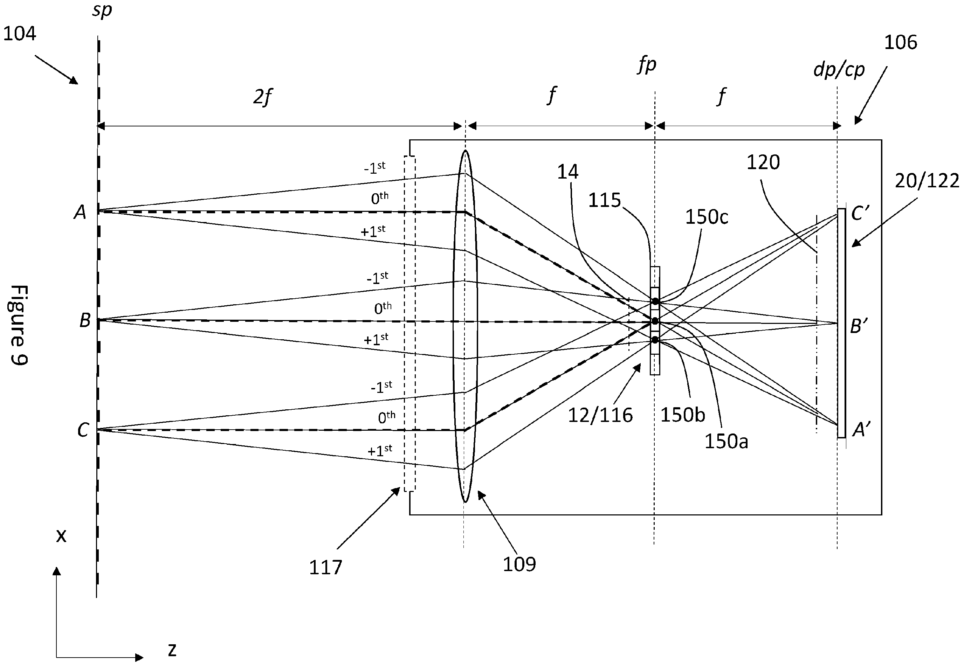

The optical configuration of the encoder apparatus 102 of Figure 7 will now be described in more detail with reference to Figures 8 and 9. Light from the VCSEL 12 is emitted toward the scale 4 though the optical retarder element (also referred to as the non-uniform/patterned retarder) 14 (which is configured in the same way as that described above in connection with Figures 2 to 6) such that light output therefrom will comprise two orthogonal polarisation orientations. The light output from the non-uniform/patterned retarder 14 is relayed to the scale 4 via the lens 109 (though a clear/transparent window 117 in the readhead 106). The VCSEL 12 is positioned at the focal length $f$ of the lens 109, such that light from the VCSEL12 is collimated by the lens 109 as it hits the scale 4. The light from the VCSEL 12 illuminates a footprint 24 on the scale 104 (see Figure 7). Light travelling toward the scale is schematically illustrated by bold dashed rays in Figures 8 and 9, whereas light returning from/reflected by the scale is illustrated by thin solid rays.

The lens 109 relays light reflected by the scale 104 to the incremental 20 and reference mark 122 sensors.

As will be understood, owing to the well-known natural phenomenon of diffraction, light reflected by the scale 104 will be diffracted due to the presence of the scale features thereon. In the case of the incremental features 10, which are periodic, the light reflected thereby will be diffracted into identifiable diffraction orders. As explained above in connection with Figures 1a and 1b, the light will be diffracted in the X-dimension into $0^{th}$ and $+/-1^{st}$ diffraction orders. Higher diffraction orders (e.g. $+/-3^{rd}$ and $+/-5^{th}$) will also be present, but these are not illustrated because they have a substantially lower intensity than the $0^{th}$ and $+/-1^{st}$ diffraction orders, and in any case are blocked from progressing to either the incremental 20 or reference mark 122 sensors by the opaque substrate 115.

The diffracted orders are incident on the lens 109, which causes corresponding diffraction orders to converge so as to form spots 150 at the back focal plane $fp$ of the lens 109; each spot being formed from a respective diffraction order. The spots 150 are images of the light source, in that the back focal plane $fp$ is the conjugate plane of the plane at which the light source is located.

In this embodiment, the diffraction order encoder 116 is co-located with the spots 150. In particular, in this embodiment, the diffraction order encoder 116 comprises a polarising filter 116a (e.g. having a "vertical" polarisation axis) which coincides with the $0^{th}$ diffraction order spot 150a, and first 116b and second 116c non-polarised transparent regions which coincide with the $+/-1^{st}$ diffraction order spots 150b, 150c. Accordingly, the diffraction order encoder 116 encodes the $0^{th}$ diffraction order with vertically polarised light only, whilst leaving the polarisation of the $+/-1^{st}$ diffraction orders unaffected (and so will contain orthogonally polarised light as per the output from the non-uniform/patterned retarder 14).

The $0^{th}$ and $+/-1^{st}$ diffraction orders propagate toward the incremental 20 and reference mark 122 sensors. A primary-sensor filter 120 is located in the optical path of the diffraction orders heading toward the incremental sensor 20. The primary-sensor filter 120 comprises a polarising filter having a "horizontal" polarisation axis, i.e. one which is orthogonal to the polarisation axis of the first polarising filter 116a. Accordingly, $0^{th}$ order diffracted light is blocked from reaching the primary position information sensor. In contrast, $+/- 1^{st}$ order diffracted light can pass through the primary-sensor filter 120 (albeit becoming "horizontally" polarised in the process), and thereby fall on the incremental sensor 20. In particular, the $+/- 1^{st}$ diffraction orders propagate toward the incremental sensor 20, and interact (constructively and destructively interfere) to form an interference fringe pattern (or "fringe field") which falls on the incremental sensor 20.

Blocking the $0^{th}$ diffraction order provides a number of improvements to the interference fringe pattern which falls on the incremental sensor 20. In particular, the interference fringe pattern visibility is improved. Also, removal of the $0^{th}$ diffraction order means that the interference fringe pattern produced at the incremental sensor 20 has a period equal to M.p/2 (which is half of the system which does not block the $0^{th}$ diffraction order). Accordingly, blocking the $0^{th}$ diffraction order effectively doubles the system resolution.

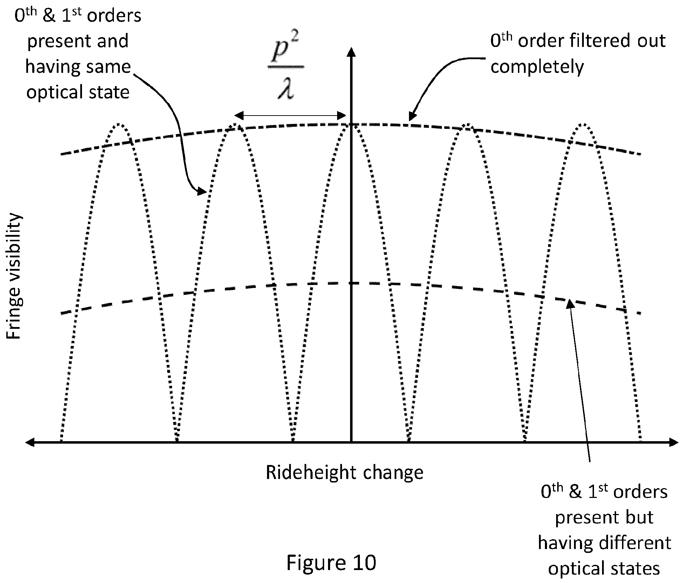

Figure 10 illustrates another advantage of removing the $0^{th}$ diffraction order. In particular, Figure 10 shows the effect blocking the $0^{th}$ diffraction order has on the visibility of the fringes falling on the incremental sensor 20 as the distance (commonly known as the "rideheight") between the scale 4 and the readhead 106 changes. As shown, when the $0^{th}$ diffraction order contributes fully to the fringe field, the visibility of the fringe field is modulated with a period of $p^2/\lambda$, where p is the scale period and $\lambda$ is the wavelength of the light. If the $0^{th}$ order is eliminated, the modulation is no longer present. This is beneficial because it allows an encoder apparatus with a scale which produces a $0^{th}$ diffraction order to have a rideheight tolerance which is independent of the scale period.

Accordingly, in summary, blocking the $0^{th}$ diffraction order produced by the scale improves the absolute fringe visibility of the fringe field falling on the incremental sensor 20, effectively doubles the system resolution, and significantly improves the rideheight tolerance of the readhead.

Furthermore, if the diffraction orders >1st are also blocked (as is the case in this embodiment due to the opaque substrate 115), then higher order harmonics are removed from the fringe field, providing a purer interference fringe pattern. As will be understood, in an alternative embodiment, blocking the diffraction orders >1st is not necessary, and for instance, the substrate 115 could be transparent (in which case the first 116b and second 116c non-polarised transparent regions might not be distinctly identifiable).

In an alternative embodiment to that shown in Figures 7 to 9, the primary-sensor filter 120 could be omitted. In this case, both the 0th and +/-1st diffraction orders will fall on the incremental sensor 20. However, because they have different polarisation states, they will not interfere with each other. The effect of this on the fringe visibility is illustrated in Figure 6. As shown, like the embodiments in which the 0th diffraction order is prevented from reaching the incremental sensor, the $p2/\lambda$ modulation of the fringe visibility with changes in rideheight is removed. However, the absolute visibility of the fringes is less than those embodiments in which the 0th diffraction order is prevented from reaching the incremental sensor. In the described embodiment, there is no corresponding filter in front of the reference mark sensor 122. Accordingly, the 0th and the +/-1st diffraction orders all fall on the reference mark sensor 122. Depending on various factors (which will be described in more detail below) it could in some circumstances be favourable to not place a corresponding filter in front of the reference mark sensor. Indeed, if the presence of both the 0th and the +/-1st diffraction orders falling on the reference mark sensor have no detrimental effect on the optical signal, e.g. "image" or "pseudo-image" (see later), formed at the reference mark sensor 122, then there is no advantage to providing corresponding filter in front of the reference mark sensor 122 (and indeed, doing so could be detrimental owing to reduced photometry).

Accordingly, as explained above, the signal sensed by the incremental sensor 20 is formed from only +/-1st diffraction orders, whereas the signal sensed by the reference mark sensor 122 is formed from the 0th and +/-1st diffraction orders. Accordingly, the signal sensed by the incremental sensor 20 is formed from a diffraction order composition that is different to that of the signal sensed by the reference mark sensor 122.

One thing to note is that in this embodiment the 0th order and the +/-1st diffraction orders are unevenly attenuated due to the 0th order having been polarised by the first polariser 116a. If desired, uneven attenuation could be avoided by replacing the first 116b and second 116c non-polarised transparent regions with second 116b and third 116c polarising filters which have a "horizontal" polarisation axis (i.e. having a polarisation axis that is orthogonal to the polarisation axis of the first polarising filter 116a). In such an embodiment, the 0th and the +/-1st diffraction orders falling on the reference mark sensor 122 will have been equally attenuated, which could result in a better quality image falling on the reference mark sensor . Furthermore, the +/-1st diffraction orders will still pass through the primary-sensor filter 120 and interfere to form an interference fringe pattern on the incremental sensor 20. Either way, as will be understood, the light falling on the incremental sensor 20 has been filtered differently to the light falling on the reference mark 122 sensor.

The light falling on the incremental 20 and reference mark 122 sensors could be described as being an "image" of the scale 4, in that the incremental 20 and reference mark 122 sensors are positioned at a detector plane *dp* which, in the embodiment shown and described, is coplanar with the conjugate plane *cp* of the scale plane *sp* (such that, for example, light from point A on the scale is imaged to point A' on the sensor, light from point B on the scale is imaged to point B' on the sensor, and light from point C on the scale is imaged to point C' on the sensor).

However, as will be understood, the suppression/blocking of selective diffraction orders such that they do not reach the sensors will have an effect on the "image" as seen at the conjugate plane *cp*. For example, removal of the 0th diffraction order (and diffraction orders greater than the 1st diffraction order due to the opaque substrate 115 blocking them) means that the "image" at the conjugate plane *cp* as falling on the incremental sensor 20 has a purer sinusoidal waveform rather than a square-shaped waveform, and so the image on the sensor is not actually a "true" or "perfect" image of the scale 4 (but rather could be referred to as a pseudo-image of the scale). As will be understood, owing to the presence of the 0th order at the reference mark sensor 122, the "image" of the scale 4 at the reference mark sensor 122 is affected to a lesser extent, especially when both the 0th and +/-1st diffraction orders have been polarised by the diffraction order encoder 116 such that they fall on the reference mark sensor 122 with equal measure.

As will be understood from the description above, without the optical retarder element (also referred to as the non-uniform/patterned retarder) 14, the light from the VCSEL light source 12 which reaches the diffraction order encoder 116 will be polarised. In particular, without the optical retarder element (non-uniform/patterned retarder) 14, what falls on the sensors 20, 122 will vary depending on the predominant polarisation orientation is emitted by the VCSEL 12. At worst it could mean that the incremental sensor 20 sees no light at all (e.g. that would be the case in this embodiment if the VCSEL light source 12 emits only vertically polarised light, in which case the +/-1st orders would be vertically polarised which would be blocked by the primary-sensor filter 120). Accordingly, the presence of the non-uniform/patterned retarder 14 ensures that the incremental sensor 20 will receive a decent signal regardless of the polarisation orientation of the VCSEL light source 12. Indeed, the particular design of the non-uniform/patterned retarder 14 of the embodiment described will ensure that that optical power of the signal falling on the incremental sensor 20 will be the same regardless of the input polarisation orientation which is dictated/output by the VCSEL 12. In particular, in the described embodiment, the non-uniform/patterned retarder 14 will ensure that the DOP of the light leaving it will be substantially 0 (0%) (e.g. less than 1%, and in particular less than 0.05%), even if the DOP of light from the VCSEL 12 is 1 (100%), regardless of the polarisation orientation.

Similar to the embodiment of Figures 2 to 6, it can be beneficial to design the optical retarder element (also referred to as the non-uniform/patterned retarder) 14 such that within at least the region of the footprint of light output from the non-uniform/patterned retarder 14 that ends up forming the optical signal at the incremental sensor 20, the different polarisation orientations are substantially evenly distributed along the Y dimension, such that, for a notional division of the region into a one-dimensional array of two rows (e.g. 21aa and 21ab) of equal width, the array extending parallel to the Y dimension, the optical power of orthogonal polarisation axes of the light output from the optical retarder element within each of said two rows, is substantially equal irrespective of the orientations of the orthogonal polarisation axes. As before, this is advantageous because it can help to suppress errors that might otherwise be caused by imperfections of the scale features along their lengths. This is because such a configuration will ensure that the signal at the incremental sensor 20 is formed from light which has come from different points along the lengths of the scale features (i.e. in the Y dimension - which is orthogonal to the measuring dimension X).

As will be understood, owing to the presence of the primary-sensor filter 120, only horizontally polarised light falls on the incremental sensor 20. Accordingly, unlike the embodiment of Figure 4(b), the light falling on the sensor 20 will not have bands 23 of alternating polarisation states. Nevertheless, in order to help facilitate an even distribution of the polarisation orientations and in order to help suppress errors that might otherwise be caused by imperfections of the scale features along their lengths, it can be preferred that the optical retarder element (also referred to as the non-uniform/patterned retarder) 14 is configured such that:

- in the Y dimension,
- within the area on the sensor 20 illuminated by light from the non-uniform/patterned retarder 14, and
- *but for* any polarisers in the path between the optical retarder element and the sensor,

the polarisation orientation of light from the optical retarder element changes over a length scale that is smaller than the extent of the sensor by a factor of at least 5, more preferably by a factor of at least 10, especially preferably by a factor of at least 15, for example by a factor of at least 20, for instance by a factor of at least 25.

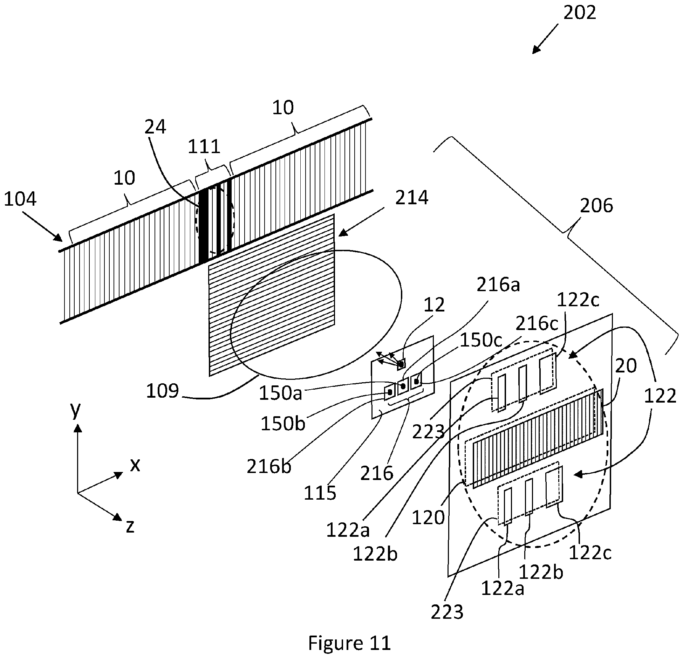

An alternative embodiment of an encoder apparatus 202 according to the present invention is shown in Figures 11, 12 and 13. This embodiment shares some parts which are identical to the embodiment of Figures 7 to 9 and like parts share the same reference numeral.

In the present embodiment, the optical retarder element (also referred to as the non-uniform/patterned retarder) 214 differs to that of the previous embodiments. For a start, in the present invention the non-uniform/patterned retarder 214 is located in the optical path between the lens 109 and the scale 104 (i.e. between the lens 109 and the window 117 of the readhead 206). The inventors found that it can be beneficial to provide the non-uniform/patterned retarder 214 after the lens 109 because of adverse diffractive optical effects which are present if the non-uniform/patterned retarder 214 is provided before the lens 109 before the light hits the scale 104. Such adverse diffraction optical effects can adversely affect the formation of the optical signal formed at the sensors 20, 122.

The diffraction order encoder 216 of the present embodiment differs to that of the embodiment of Figures 7 to 9. In the present embodiment, the diffraction order encoder 216 comprises first 216a, second 216b and third 216c polarising filters respectively coincident with the 0$^{th}$, +1$^{st}$ and -1$^{st}$ diffraction order spots 150a, 150b, 150c, so as to polarise the 0$^{th}$, +1$^{st}$ and -1$^{st}$ diffraction orders. The polarisation axis of the second 216b and third 216c polarising filters are configured with the same orientation as each other, such that the +/-1$^{st}$ diffraction orders are polarised by the second 216b and third 216c polarising filters such that the +/-1$^{st}$ diffraction orders have the same (e.g. "horizontal") polarisation orientation as each other. The polarisation axis of the first polarising filter 216a is configured with a different, and preferably orthogonal, orientation to polarisation axis of the second 216b and third 216c polarising filters, such that the 0$^{th}$ diffraction order is polarised with a different (e.g. "vertical") polarisation orientation to the +/- 1$^{st}$ diffraction orders. Accordingly, the diffraction order encoder 216 encodes the +1$^{st}$ and -1$^{st}$ diffraction orders with a first polarisation orientation, and encodes the 0$^{th}$ diffraction order with a second polarisation orientation that is different to the first polarisation orientation. As shown, the first 216a, second 216b and third 216c polarising filters are spaced apart from each other such that they do not directly touch each other, but this need not necessarily be the case.

The polarised diffraction orders propagate toward the incremental 20 and reference mark 122 sensors. In the same way as the embodiment described above in connection with the embodiment of Figure 3, a primary-sensor filter 120 is located in the optical path of the diffraction orders heading toward the incremental sensor 20. The primary-sensor filter 120 comprises a polarising filter having a polarisation axis which is parallel to that of the second 216b and third 216c polarising filters (and therefore is orthogonal to the polarisation axis of the first polarising filter 216a). Accordingly, 0$^{th}$ order diffracted light is blocked from reaching the primary position information sensor. In contrast, +/- 1$^{st}$ order diffracted light can pass through the primary-sensor filter 120, and thereby fall on the incremental sensor 20. In particular, the +/- 1$^{st}$ diffraction orders propagate toward the incremental sensor 20, and interact (constructively and destructively interfere) to form a fringe field which falls on the incremental sensor 20. The benefits of preventing the 0$^{th}$ diffraction order from contributing to the optical signal falling on the incremental sensor 20 was described above in connection with the embodiment of Figure 7.

In contrast to the embodiment of Figure 7, a secondary-sensor filter 223 is located in the optical path of the diffraction orders heading toward the reference mark sensor 122. In particular, the secondary-sensor filter 223 comprises a polarising filter, having a polarisation axis that is parallel to the polarisation axis of the first polarising filter 216a (and therefore is orthogonal to the polarisation axis of the second 216b and third 216c polarising filters). Accordingly, the secondary-sensor filter 223 will block the +/- 1st diffraction orders and thereby prevent them from contributing to the optical signal falling on the reference mark sensor 122. Therefore, only the 0th diffraction order light will reach, and contribute to the optical signal falling on, the reference mark sensor 122. Such an arrangement has been found to be advantageous, in particular in those embodiments where there are incremental features located within the reference mark.

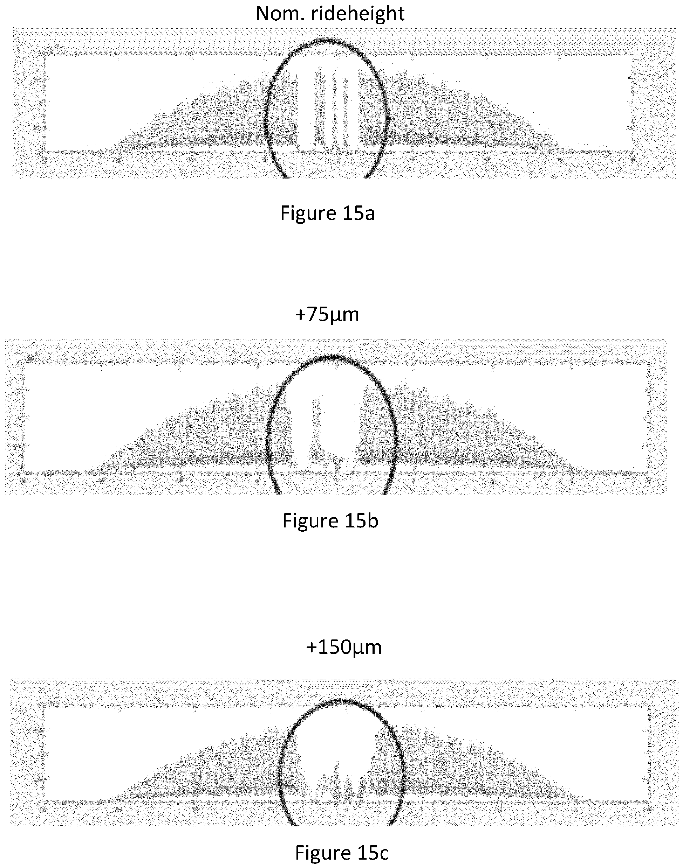

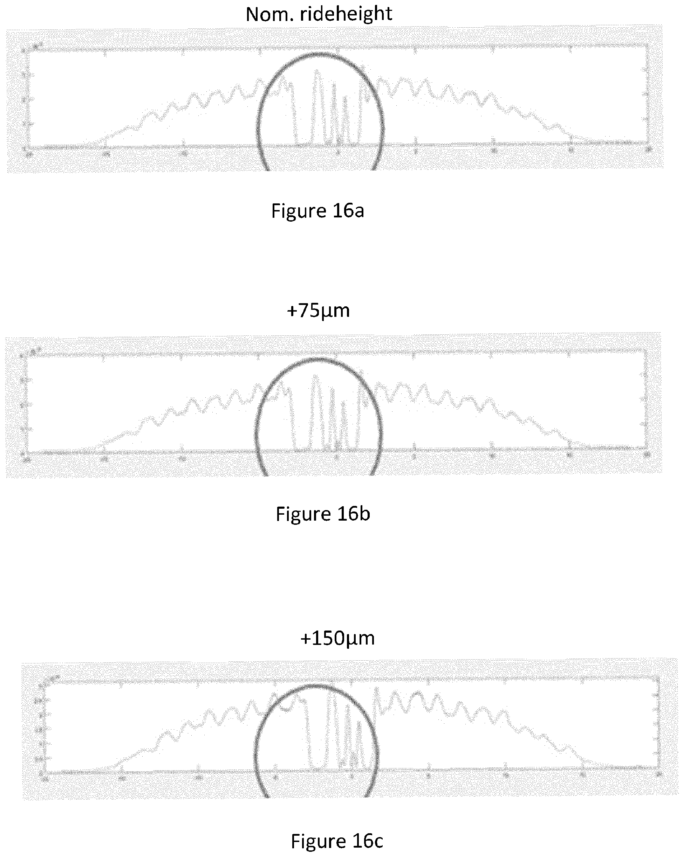

For example, referring to Figures 15 and 16, the effect of filtering out the +/-1st diffraction orders on the image (or "pseudo-image") at the readhead's detector plane is illustrated. In particular, Figures 15a, 15b and 15c respectively illustrate the image of the scale that will be reconstructed at the readhead's detector plane dp/conjugate plane cp from both the 0th and +/-1st diffraction orders when the readhead is located at: a) the readhead's nominal rideheight; b) +75$\mu$m from the nominal rideheight; and c) +150$\mu$m from the nominal rideheight. As illustrated, at the nominal rideheight, the image of the reference mark (highlighted by the circle in Figures 15a to 15c) is good, but the image of the reference mark is substantially corrupted when the readhead moves away from its nominal rideheight. This has been found to be a particular problem when the reference mark contains periodic incremental features, but can be a (albeit smaller) problem even for reference marks which do not comprise incremental features. Such corruption of the image causes the signal output by the reference mark sensor 122 to be broader and less distinct as the readhead passes the reference mark, which can cause problems with the reliability of the reference mark (e.g. the signal is so weak that the reference mark is not detected) and/or the repeatability of the reference mark (e.g. the reference mark signal is so broad that it is not repeatable to within one incremental period.

Figures 16a, 16b and 16c respectively illustrate the image of the scale that reconstructed at the readhead's detector plane dp/conjugate plane cp from just the 0th diffraction order when the readhead is located at: a) the readhead's nominal rideheight; b) +75$\mu$m from the nominal rideheight; and c) +150$\mu$m from the nominal rideheight. As illustrated by Figure 16, the image of the reference mark (highlighted by the circle in Figures 16a to 16c) reconstructed at the readhead's detector plane dp/conjugate plane cp maintains good structure and maintains a good likeness of the reference mark, and in turn provides for a distinct, strong reference mark signal from the reference mark sensor 122, even at rideheights away from the nominal rideheight. Accordingly, it has been found beneficial to provide a secondary-sensory filter 223 in front of the reference mark sensor 122 which filters out the +/-1st diffraction order such that they do not contribute to the image of the scale reconstructed at the readhead's detector plane dp/conjugate plane cp. In particular, configuration provides a readhead with better rideheight tolerance.

As will be understood, if desired, the reference mark sensor 122 could comprise a split detector similar to that of Figure 3, wherein the photodiodes 122a, 122b, 122c are duplicated and laterally offset in the X-dimension, and the outputs from the duplicated photodiodes being connected to form the second reference mark output which can be used to provide a difference signal, like that of Figure 5(b), from which the presence of the reference mark can be detected.

Accordingly, as explained above, the signal sensed by the incremental sensor 20 is formed from only +/-1st diffraction orders, whereas the signal sensed by the reference mark sensor 122 is formed from only the 0th diffraction order. Accordingly, the signal sensed by the incremental sensor 18 is formed from a diffraction order composition that is different to that of the signal sensed by the reference mark sensor 122.

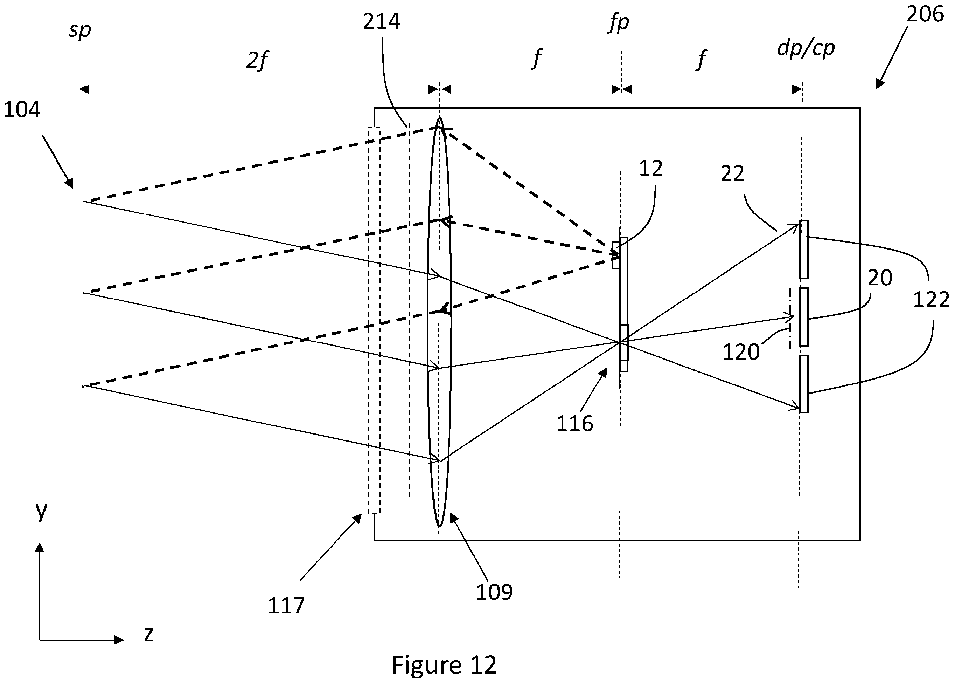

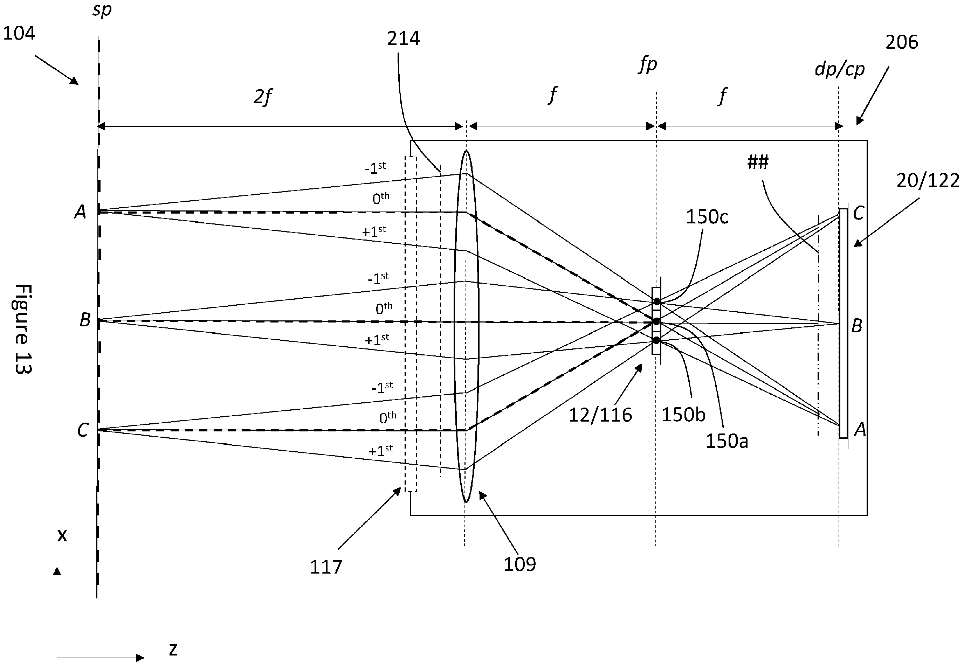

As illustrated in Figures 12 and 13, in contrast to the embodiment of Figures 7 to 9, the light from the VCSEL 12 passes through the optical retarder element (also referred to as the non-uniform/patterned retarder) 214 twice; once on its way toward the scale 104 and once on its return from the scale toward the sensors (20, 122). In reality, the extent of overlap at the non-uniform/patterned retarder 214 of the beams of light toward and from the scale will likely be greater than that schematically shown in Figure 12. Although moving the non-uniform/patterned retarder 214 to be located such that it is positioned after the lens 109 (with respect to the light emitted from the VCSEL 12 travelling toward the scale 104) was found to avoid the above-mentioned adverse diffractive optical effects, such a double-pass of the light through the non-uniform/patterned retarder 214 was found to provide a new challenge to the designers of the encoder apparatus. Indeed, the polarisation orientation of the light returning through the non-uniform/patterned retarder 214 for a second time would be altered for a second time. The inventors found that this can lead to many of the sections/portions of light having their polarisation "undone", resulting in the light output from the non-uniform/patterned retarder 214 after its second pass therethrough having an uneven mix of polarisation orientations which can be undesirable, in turn resulting in the light after its second pass still having a predominant polarisation orientation (or in other words not resulting in a substantial/meaningful difference in the DOP of the beam emitted from the light source compared to the DOP of the beam after its second pass through the non-uniform/patterned retarder 214, e.g. it still having DOP greater than 0.2 or 20%).

The inventors determined that, in a double-pass system, an optical retarder element (also referred to as the non-uniform/patterned retarder) 114 having half-waveplate pixels 109 which are arranged with their differing fast-axes in a periodic arrangement (i.e. like the non-uniform/patterned retarder 14 of the embodiments of Figures 2 to 10) result in a significantly unbalanced distribution of polarisation orientations propagating toward the diffraction order encoder 116, leading to adverse consequences. The inventors identified that for a double-pass system, the mix of polarisation orientations leaving the non-uniform/patterned retarder 14 for the second time and therefore propagating toward the diffraction order encoder 116 can be made more evenly balanced by providing a non-uniform/patterned retarder 114 having half-waveplate pixels 109 which are arranged with their differing fast-axes in an aperiodic arrangement. Whilst a random aperiodic arrangement was found to typically provide an improvement of a periodic arrangement, the inventors found that some aperiodic arrangements of fast-axes are better than others at providing a balanced mix of polarisation orientations propagating toward the diffraction order encoder 116 regardless of the predominant input polarisation orientation of the footprint of light initially hitting the non-uniform/patterned retarder 114 from the VCSEL 12. As mentioned above, a substantially balanced mix of polarisation orientations within any given region of light output from the non-uniform/patterned retarder, means that the optical power of the light output from the non-uniform/patterned retarder within said region, is substantially equal along orthogonal polarisation axes irrespective of the orientations of the orthogonal polarisation axes.

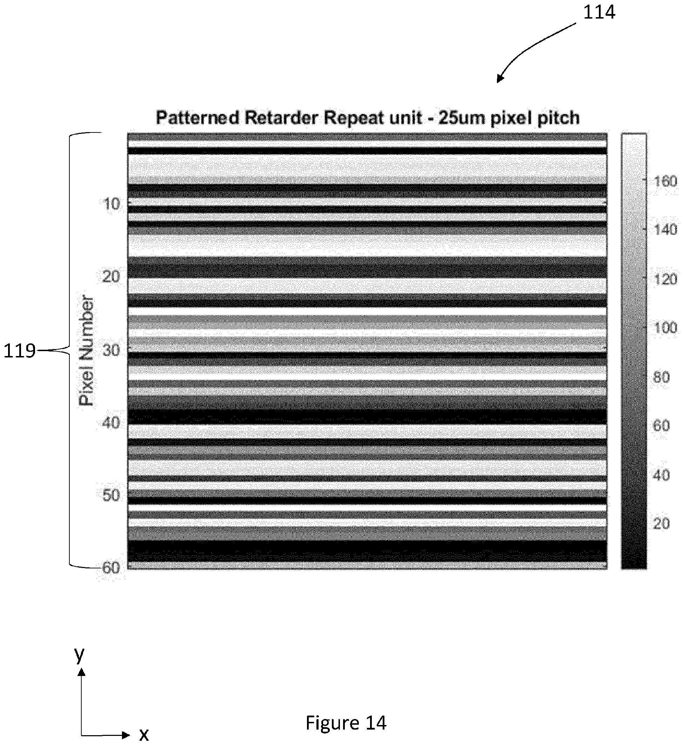

Figure 14 illustrates an example optical retarder element (also referred to as the non-uniform/patterned retarder) which is suitable for use in a double-pass configuration and can provide a suitably balanced mix of polarisation orientations propagating toward the sensors 20, 122. The below table lists the fast axis orientations for each of the sixty pixels that make up the non-uniform/patterned retarder 114:

| Pixel # | Fast axis orientation (degrees) relative to horizontal axis | Pixel # | Fast axis orientation (degrees) relative to horizontal axis |
|---|---|---|---|
| 1 | 70 | 31 | 6 |
| 2 | 173 | 32 | 51 |
| 3 | 4 | 33 | 152 |
| 4 | 171 | 34 | 178 |
| 5 | 164 | 35 | 66 |
| 6 | 168 | 36 | 144 |
| 7 | 136 | 37 | 57 |
| 8 | 10 | 38 | 42 |
| 9 | 39 | 39 | 2 |
| 10 | 159 | 40 | 3 |

| | | | |
|---|---|---|---|
| 11 | 12 | 41 | 169 |
| 12 | 151 | 42 | 158 |
| 13 | 7 | 43 | 11 |
| 14 | 77 | 44 | 103 |
| 15 | 161 | 45 | 57 |
| 16 | 173 | 46 | 166 |
| 17 | 177 | 47 | 159 |
| 18 | 52 | 48 | 36 |
| 19 | 26 | 49 | 169 |
| 20 | 32 | 50 | 77 |
| 21 | 168 | 51 | 1 |
| 22 | 165 | 52 | 179 |
| 23 | 51 | 53 | 57 |

(continued)

| 24 | 13 | 54 | 168 |
| 25 | 179 | 55 | 73 |
| 26 | 92 | 56 | 88 |
| 27 | 120 | 57 | 2 |
| 28 | 176 | 58 | 3 |
| 29 | 111 | 59 | 7 |
| 30 | 145 | 60 | 132 |

Accordingly, as shown, in this embodiment, the non-uniform/patterned retarder 114 comprises a plurality of (in this embodiment, sixty) half-waveplate pixels 119 having more than two different fast-axes orientations, and they are not arranged periodically.

Of course, the above arrangement of fast-axes is not the only arrangement which can provide a substantially balanced mix of polarisation orientations are output from the non-uniform/patterned retarder 114 after the light has passed through it twice. Other arrangements are possible and can be chosen by the designer of the optical encoder system. When designing such a non-uniform/patterned retarder the designer can take into consideration that if the initial polarisation state of the light is given by:

$$E_0 = \begin{pmatrix} cos(\theta) \\ sin(\theta) \end{pmatrix} \qquad (2)$$

where $\theta$ is the angle of linear polarisation, then the polarisation state after a single pass through the non-uniform/patterned retarder (assuming a half wave plate) is given by:

$$E_1 = \begin{pmatrix} cos(\theta - 2\alpha(x,y)) \\ -sin(\theta - 2\alpha(x,y)) \end{pmatrix} \qquad (3)$$

where $\alpha(x,y)$ is the fast axis orientation of the non-uniform/patterned retarder as a function of x and y (in the specific embodiments described, the fast-axis of the non-uniform/patterned retarder varies in only one-dimension - the y dimension - and so in these cases $\alpha(x,y)$ could simply be written as $\alpha(y)$. After a reflection off the scale and a pass through another non-uniform/patterned retarder, the polarisation state is:

$$E_2 = \begin{pmatrix} cos\left(\theta + 2(\beta(x',y') - \alpha(x,y))\right) \\ sin\left(\theta + 2(\beta(x',y') - \alpha(x,y))\right) \end{pmatrix} \qquad (4)$$

where $\beta(x',y')$ (which, as explained above, could be written as $\beta(y')$ for the specific embodiments described) is the fast axis orientation of the second non-uniform/patterned retarder at the point $(x',y')$. In the current embodiment, the two non-uniform/patterned retarders are the same device which means $\alpha$ and $\beta$ and linked. When $\alpha=\beta$, the second pass undoes the first pass giving the original polarisation state. This means there must be a position offset between the first and second pass for each photon that undergoes a change of polarisation after two passes. We can also see that if $\alpha$ and therefore $\beta$ varies linearly, then $\beta-\alpha$ is the same everywhere and there is no scrambling of polarisation after the second pass, only a net rotation, although this ignores any diffraction effects. If the pixel width and linear function is such that they promote diffraction, the light spreads sufficiently such that light exiting $\alpha(x, y)$ (or $\alpha(y)$) does not all enter $\beta(x',y')$ (or $\beta(y')$); this results in scrambling and not merely a net rotation.

There are some preferred system desirables which can help to guide the selection of the fast-axes of the half-waveplate pixels 119, including: i) minimal reduction in the visibility of the interference fringe pattern formed at the incremental sensor 20; ii) consistent optical power on the sensors 20, 122; and iii) uniform sampling of the scale 104.

With regard to i) the visibility of the interference fringe pattern, a small amount of diffraction along the measurement direction of scale (X) could cause a notable drop in fringe visibility. A simple method of mitigating this issue is to only vary the fast axis orientation in the dimension (Y) which is perpendicular to the measurement direction of scale, thereby reducing/eliminating the possibility of diffraction in the measurement dimension (X). This also has the benefit of simplifying the design which reduces the parameter space for design optimisation.

With regard to ii) consistent optical power on the sensors 20, 122, as the predominate input polarisation orientation changes, so does the mixture of polarisation states in the light output from the non-uniform/patterned retarder 114. This has the knock-on effect of changing the ratio and distribution of optical power in orthogonal polarisation states after the second pass through the non-uniform/patterned retarder 114. Consistency of optical power can be achieved by mixing the polarisation states evenly and on a length scale much smaller than the footprint of light as it falls on the sensor. Accordingly, as described above in connection with the embodiment of Figures 7 to 10, it can be preferred that the non-uniform/patterned retarder 114 is configured such that:

- in the Y dimension;
- within the area on the sensor (e.g. sensor 20), illuminated by light from the non-uniform/patterned retarder 114; and
- but for any polarisers in the path between the non-uniform/patterned retarder 114 and the sensor,

the polarisation orientation of light from the optical retarder element changes over a length scale smaller than the extent of the sensor by a factor of at least 5, more preferably by a factor of at least 10, especially preferably by a factor of at least 15, for example by a factor of at least 20, for instance by a factor of at least 25.

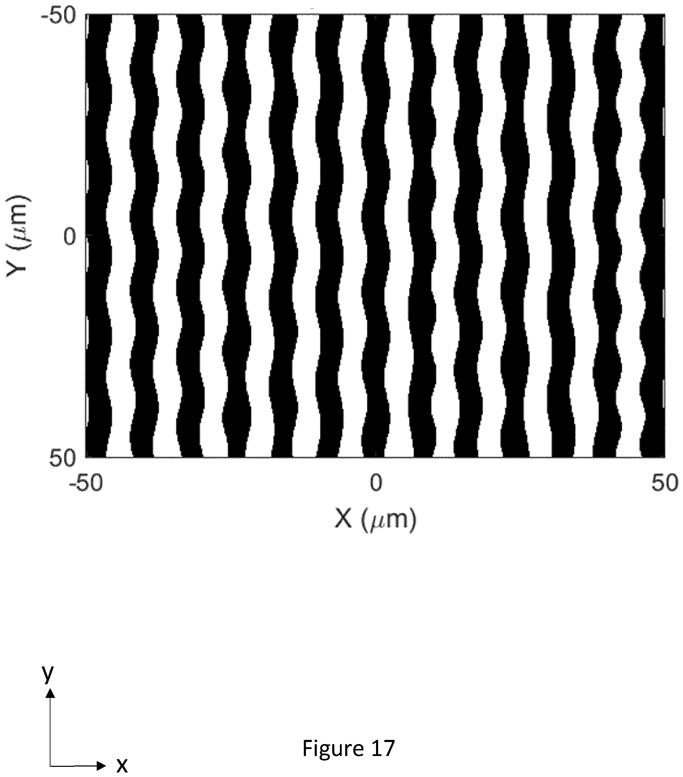

With regard to iii) uniform sampling of the scale, the scale is unlikely to be a perfect diffraction grating and will therefore have errors in line placement and form. For instance, Figure 17 illustrates how that at a microscopic level the incremental scale features 10 are not perfectly straight and uniform along their length. Therefore, as described above in connection with the other embodiments, it can be beneficial to ensure that the light that forms the signal at the sensor has come from different points on the scale along the Y-dimension, which in this embodiment, due to the polarising diffraction order encoder 216 and the polarisers 120, 223 in front of the sensors 20, 122, means that it can be beneficial that the light leaving the non-uniform/patterned retarder 114 for the second time has an appropriate spread/distribution of different polarisation orientations in the Y-dimension. If not, then the signal formed at each sensor 20, 122 could be formed from light which comes substantially from one region/band of the scale (in the Y-dimension). As explained above in connection with the other embodiments, an appropriate (for example an even) distribution of the different polarisation orientations in the Y-dimension can be a distribution which ensures that for a notional division of the region of the footprint of light output from the non-uniform/patterned retarder 114 that forms the optical signal at the sensor (e.g. sensor 20) into a one-dimensional array of two rows of equal width, the array extending parallel to the Y-dimension, the optical power of the light output from the optical retarder element within each of said two rows, is substantially equal along orthogonal polarisation axes irrespective of the orientations of the orthogonal polarisation axes. If desired, the number of rows into which the region is divided and which must comply with the above requirement can be increased (e.g. to four, or eight), in order to ensure a more even distribution of the different polarisation orientations.

In summary, the DOP of the light leaving the non-uniform/patterned retarder can be minimised by producing an even mix of polarisation for any input polarisation state. This can be achieved by varying the fast axis orientation of the non-uniform/patterned retarder across the field of view in a way which achieves this. One way of achieving this is a random distribution of fast axis orientations. If the selection of the fast axis orientations is truly random, it is possible that a very effective non-uniform/patterned retarder will be obtained, but it is also possible that not very effective devices non-uniform/patterned retarder will be obtained. Accordingly, for consistency and predictability it can be preferred that variation of the fast axis orientation across the non-uniform/patterned retarder is not truly random. The ideal solution for a single pass is the one with the most even mix of fast axes possible.

Accordingly, instead of randomly distributing fast axis orientations, the pixel fast axis orientations could be evenly distributed with a constant angular difference between pixels. This could have the advantage of evenly distributing polarisation angles as the light reaches the scale. For example, a distribution could be aligning pixels with angles 0°, 1°, 2°, 3°... etc, with a single degree between pixels. Alternatively, this could be at a finer sampling size with fractions of degrees, or indeed much larger increments between fast axis angles. For example, a larger increment between pixels of 75° would result in the fast axis values of 0°, 75°, 150°, 225°, 300°... etc. However, this isn't the optimal way of expressing these values. A waveplate's effective fast axis is modulo 180° - meaning the waveplate behaves the same way so long as its phase is rotated by an integer multiple of 180°. Accordingly, the previous sequence is better represented as the remainder after dividing by 180°: 0°, 75°, 150°, 45°, 120°. Fast axis values generated in this way will herein be described as phase-wrapped linear functions. To provide a good mix of polarisation states, it can be preferred that the fast-axis values of the non-uniform/patterned retarder do not repeat over its length (e.g. in the described embodiments, in the Y-dimension). In other words, it can be preferred that the fast axis values of the non-uniform/patterned retarder vary according to a non-repeating design/form/pattern. Accordingly, a preferred embodiment of a non-uniform/patterned retarder comprises fast-axis values that vary according to a phase-wrapped linear function which provides no repeats over at least the length of the region of the footprint of light output from the non-uniform/patterned retarder that forms the optical signal at the sensor. As will be understood, an incremental value of 75 would only provide twelve distinct values of fast-axes before they start to repeat, and so would only provide for a twelve-pixel non-uniform/patterned retarder without any repeats of the fast-axis value. Therefore if a non-uniform/patterned retarder is desired with a greater number of pixels before the fast-axis values begin to repeat, a different fast-axis increment value between pixels is needed and can be selected depending on the user requirement. For example, a fast-axis increment value of 42 degrees would provide for thirty distinct fast-axis values before any repeats occur (and therefore can provide for a thirty-pixel non-uniform/patterned retarder without any repeats of the fast-axis value).

If desired, in an alternative embodiment, a machine learning optimisation process can be used to aid designing an optical retarder element (also referred to as the non-uniform/patterned retarder). To create an optimised design for the specific system geometry, it can be beneficial to model the diffraction effects accurately. At the heart of an optimisation loop according to one embodiment exists a one-dimensional physical optics simulation based on the target system geometry. The input is a completely polarised plane wave which simulates the collimated light incident on the non-uniform/patterned retarder. The interaction of this plane wave with the non-uniform/patterned retarder is simulated using Jones calculus. The field is then propagated using the non-paraxial Fresnel propagator to the plane where the scale would sit in the target encoder geometry. The field at this plane is logged for evaluation. The field is then propagated to the second non-uniform/patterned retarder which takes the same form as the first retarder but with a position offset equal to the target offset in the encoder system. The interaction with the field is simulated before propagating to the plane of the lens where the field is logged again.

This whole process is repeated as the polarisation of the input plane wave is moved through the 180 degree range of possible input polarisations. With this data, the DOP at the scale and the detector can be evaluated as a function of length scale. The DOP at the scale and the detector form the two metrics for optimisation and the length scale over which the DOP is evaluated depends on sensor size and scale specifics. The weighted sum of these two values forms the objective which is minimised. Optionally, the DOP at the scale is weighted more than the DOP at the detector.

A simulated annealing optimisation approach can be used. In each iteration, the fast axis orientation of a pixel can be altered to a new random value, the objective calculated, and compared to the previous objective. If the new value is less than the previous, the new solution is accepted. If the new value is greater than the previous (or equal), the solution may or may not be selected based on chance. The probability of acceptance is given by

$$P_{accept} = \frac{1}{1 + exp\left(\frac{\Delta}{T}\right)} \qquad (5)$$

Where $\Delta$ = new objective - old objective and T= the current temperature (or a "free parameter". The acceptance probability depends on how much worse (higher) the new object is than the previous objective and the current temperature. The temperature starts high and is reduced after each cycle. The initial temperature is set high so that the solution space can be explored freely before the reducing temperature forces the optimisation to converge on a solution. This approach reduces the odds of converging on a local minimum instead of a global minimum. In the specific implementation the temperature is reduced after a random trial has been performed on all the pixels in the retarder. This completes a single loop. The process is then repeated many times until the algorithm has converged on a solution. The output is an aperiodic solution which generally has strong performance characteristics but cannot be written down analytically.

In the embodiments described above, the waveplate pixels 19, 119 comprise halfwaveplates. However, as will be understood, the waveplate pixels 19, 119 could instead comprise quarter-waveplates, or indeed waveplates of any fraction. Furthermore, in the embodiments described above, the waveplate pixels 19, 119 all have the same waveplates fraction (i.e. the same retardance value) and it is the fast-axis that is varied from one waveplate pixel to another. However, this need not necessarily be the case. Instead, the fast-axis of each pixel and the waveplate fraction (or "retardance") of the waveplate pixels could vary. Optionally, in another embodiment, the non-uniform/patterned retarder could be configured such that the fast axis and waveplate fractions could vary from one waveplate pixel to another. The waveplate pixels could comprise birefringent material, such as quartz, mica, or liquid crystal. Optionally, the waveplate pixels could comprise structures configured to provide birefringent-like properties, such as metamaterials. For example, it is known that nanocasting lithography can be used to provide a waveplate.

As will be understood, other types of sensor could be used instead of the above described electrograting. For example, in embodiments in which modulated spots are created by the readhead's optical system instead of an interference fringe pattern, bulk sensor photodiodes could be used to detect the intensity of the modulated spots.

In the embodiment described, the light source 10 emits electromagnetic radiation (EMR) in the near infra-red range. However as will be understood, this need not necessarily be the case and could emit EMR in other ranges, for example anywhere in the infra-red to the ultra-violet. As will be understood, the choice of a suitable wavelength for the light source 10 can depend on many factors, including the availability of suitable gratings and detectors that work at the EMR wavelength.

In the embodiment described above, the scale is a reflective scale. However, this need not necessarily by the case. For instance, the scale could be a transmissive scale, wherein the light source and sensors are located on opposing sides/faces of the scale.

In the embodiments described above, the encoder comprises an incremental scale with (or optionally without) one or more reference marks. However, the non-uniform/patterned retarder could be used with other types of optical encoder, for example an absolute encoder where a VCSEL is to be used in place of an unpolarised light source such as an LED. For example, referring to the absolute encoders described in US5279044 or US10132657, if a VCSEL light source were used, it could be beneficial to use the non-uniform/patterned retarder of the present invention. In particular, the use of non-uniform/patterned retarder could avoid any adverse effects caused by polarised light hitting the scale. Furthermore, optionally, a non-uniform/patterned retarder can be of particular use in an absolute encoder, when (like the embodiments of Figures 7 and 11 above, one or more of the diffraction orders from the scale are encoded with a polarisation state (e.g. for the purpose of subsequent filtering).

The above-described embodiments use a non-uniform/patterned retarder as the polarisation manipulator for reducing the degree of polarisation. Other types of optical elements could be used in place of a non-uniform/patterned retarder, such as a diffuser, or a time-based polarisation manipulator. As will be understood, in the case of a time-based polarisation manipulator, the rate of modulation would need to be faster than the acquisition bandwidth of the encoder's sensor(s). Typically, a rate of at least 1 MHz should be sufficient. Fibre-coupled time-based polarisation scramblers exist, such as those available from FIBREPRO Inc which would be suitable for a fibre-optic type position encoder. A spatial polarisation manipulator, in particular a non-uniform/patterned retarder has been found to be preferred because time-based manipulators require electronics that may not be conducive to a compact encoder, and depending on the embodiment, a diffuser may provide adverse significant deflection of rays, which adversely affect the formation of an interference fringe pattern.

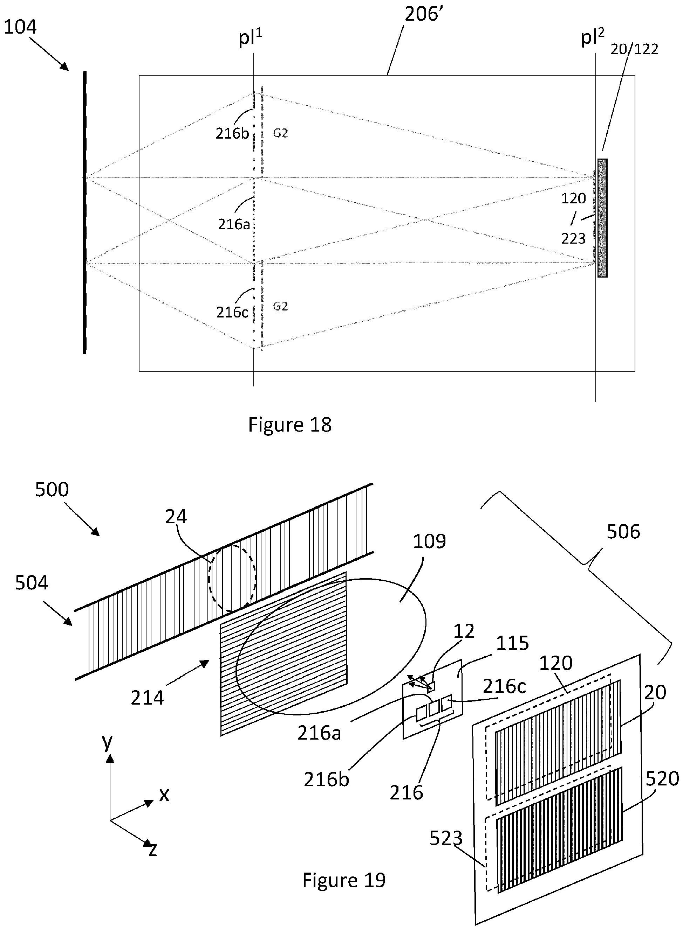

The above-described embodiments of Figures 7 and 11 use a refractive lens 109 to relay the diffraction orders toward the sensors. However, as will be understood, this need not necessarily be the case. For instance, Figure 18 schematically illustrates an optical system of an encoder apparatus comprising an incremental scale 104 and a readhead 206' according to another embodiment of the invention which is similar to that of Figure 11 (and like parts share like reference numerals) except that it does not rely on a refractive lens 109 to relay the diffraction orders toward the sensors. In this embodiment, $0^{th}$ and $+/-1^{st}$ diffraction orders are produced from the light from the light source hitting and being reflected by the scale 104. As illustrated, the $0^{th}$ and $+/-1^{st}$ diffraction orders are spatially separate at a first plane $pl^1$. The diffraction order encoder 216 is located at the first plane $pl^1$. As per the embodiment of Figure 11, the diffraction order encoder comprises a polarising filter 216a (e.g. having a "vertical" polarisation axis) which coincides with the $0^{th}$ diffraction order so as to encode the $0^{th}$ diffraction order with a first (e.g. vertical) polarisation orientation. The diffraction order encoder further comprises and second 216b and third 216c polarising filters which coincide with the + And - $1^{st}$ diffraction orders. The second 216b and third 216c polarising filters are configured with the same orientation as each other such that the $+/-1^{st}$ diffraction orders have the same (e.g. "horizontal") polarisation orientation as each other, but different to the polarisation orientation of the $0^{th}$ diffraction order. Diffraction gratings G2 are located so as to cause the polarised $+/-1^{st}$ diffraction orders to converge. The $0^{th}$ diffraction order is not deflected. Accordingly, the $0^{th}$ diffraction order and the $+/-1^{st}$ diffraction orders meet at a plane $pl^2$ at which the incremental 20 and reference mark 122 sensors are located. As per the embodiment of Figure 11, a first polariser 120 can be located in front of the incremental sensor 20 and can be configured to filter out the $0^{th}$ diffraction order such that it doesn't reach the incremental sensor 20 and/or a second polariser 223 can be located in front of the reference mark sensor 122 and can be configured to filter out the $+/-1^{st}$ diffraction orders such that they do not reach the reference mark sensor 122. The light source 12 and non-uniform/patterned retarder are omitted from Figure 18 for sake of clarity of illustration. As will be understood, a separate refractive lens or a grating can be used to collimate light from the light source toward the scale, if desired or necessary.

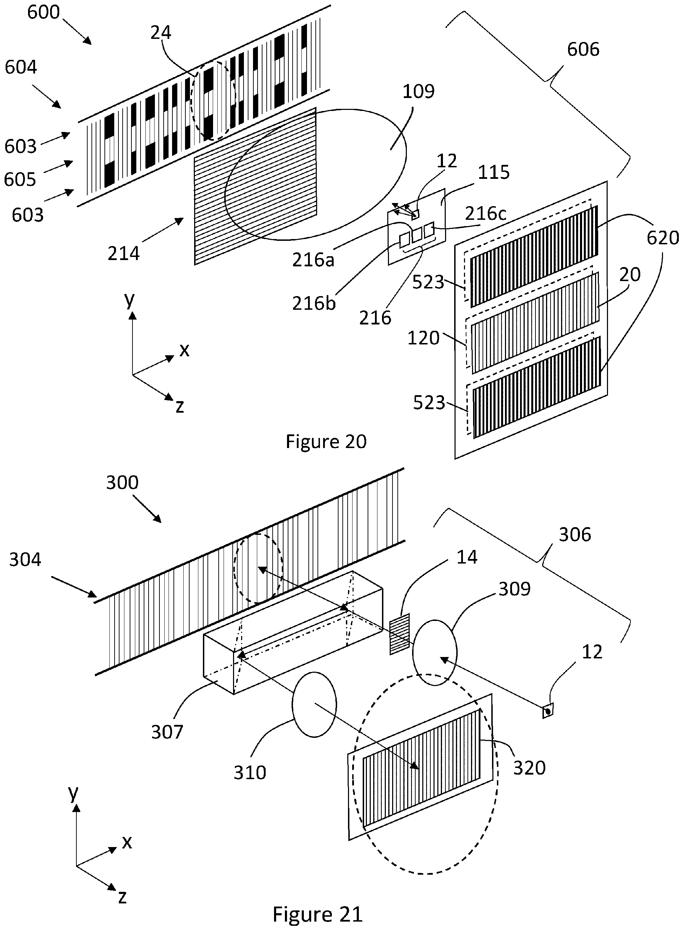

The embodiments described so far have been in connection with incremental encoders, comprising an incremental scale with (or optionally without) one or more reference marks. The invention can also be used with absolute encoders comprising absolute scale, such that those depicted in Figures 19 and 20. In the embodiment of Figure 19, the absolute scale 504 comprises features arranged notionally periodically, but wherein select features have been removed to encode unique/absolute position data along the measuring length of the scale. The data can be in the form of, for instance, a pseudorandom sequence or discrete codewords. Details of such a scale are described in more detail in US7499827 and US5279044. The readhead 506 (the body of which is omitted for the sake of clarity) shares some parts which are the same as those described above in connection with the other embodiments of the invention, and therefore like parts share the same reference numeral. For instance, the readhead 506 comprises a VCSEL light source 12, a lens 109, an optical retarder element (also referred to as the non-uniform/patterned retarder) 214, a diffraction order encoder 216, incremental detector 20 and primary-sensor filter 120, which are configured and arranged in the same manner as that described above in connection with the embodiments of Figure 11. Accordingly, the $0^{th}$ order is blocked such that it does not contribute to forming the signal detected by the incremental sensor 20. As with the other embodiments, the primary-sensor filter 120 comprises a polarising filter having a polarisation axis which is perpendicular to the polarisation axis of the first polarising filter 216a of the diffraction order encoder 216. In particular, in this embodiment, the first polarising filter 216a has a vertical polarisation axis and the primary-sensor filter 120 has a horizontal polarisation axis.

In this embodiment, the readhead 506 further comprises an absolute sensor 520, which comprises a photodiode array (in this embodiment a one-dimensional photodiode array, but it could be two-dimensional), on which an image (or "pseudo-image" - see above) falls. As is known, and for example described in US7499827, US5279044 and US 10989567, an image of the scale can be processed in order to extract the absolute/unique code so as to thereby determine an absolute position. The absolute position can be combined with the incremental position determined from the incremental detector 20 to provide a fine-pitch absolute position. Optionally, once the absolute position has been determined, subsequent positions can be determined solely by monitoring the output from the incremental detector 20.

Similar to the reference mark embodiments described above, it can be beneficial to allow the $0^{th}$ order to contribute to the signal falling on the absolute sensor. Furthermore, similar to the reference mark embodiments described above it can be beneficial to prevent the +/-$1^{st}$ diffraction orders from contributing to the signal falling on the absolute sensor 520. Accordingly, a secondary-sensor filter 523 can be provided in front of the absolute sensor 520 which has a polarisation axis orthogonal to the polarisation axes of the second 216b and third 216c polarising filters of the diffraction order encoder 216. In particular, in this embodiment, the second 216b and third 216c polarising filters have a horizontal polarisation axis and the secondary-sensor filter 523 has a vertical polarisation axis.

Figure 20 illustrates another embodiment of an absolute encoder 600 comprising an absolute scale 604, which is substantially identical to that described above in connection with Figure 21 (and like part share the same reference numeral), except that in this embodiment, the scale comprises a multi-track arrangement wherein absolute code features are provided in absolute scale tracks 603 provided either side of a pure incremental track 605. As shown, the absolute scale tracks 603 also comprise the finer pitch/period incremental features in the spaces between the coarser pitch/period features of the absolute scale tracks 603. As an example, the coarse features of the absolute scale tracks which encode the absolute position information could have a nominal period of approximately $32\mu m$ and the finer pitch/period incremental features can have a period of approximately $8\mu m$. As a result, there are effectively two sets of diffraction orders produced; a first set of diffraction orders which are produced by the first series of position features (e.g. the $8\mu m$ incremental scale features) and a second set of diffraction orders produced by the second series of position features (e.g. the absolute scale features). As it happens, in this embodiment, the $0^{th}$ diffraction order of the first set of diffraction orders passes through the first polarising filter 216a of the diffraction order encoder 216 and the +/-$1^{st}$ diffraction order of the first set of diffraction orders passes through the second 216b and third 216c polarising filters, whereas the $0^{th}$ and the +/-$1^{st}$ diffraction orders of the second set of diffraction orders all pass through the first polarising filter 216a of the diffraction order encoder 216. The higher diffraction orders of the first set of diffraction orders (e.g. the +/-$3^{rd}$, +/-$5^{th}$ diffraction orders are blocked by the opaque substrate 115. The +/-$3^{rd}$ diffraction orders of the second set of diffraction orders pass through the second 216b and third 216c polarising filters of the diffraction order encoder 216. Diffraction orders greater than the +/-$3^{rd}$ of the second set of diffraction orders have substantially insignificant power, but what does exist of them will be blocked by the opaque substrate 115. As will be understood, which diffraction orders go through which filter is system dependent and can depend on various factors, including the size and/or position of the polarising filters.

As shown, the sensor arrangement of the embodiment of Figure 15 is slightly different to that of Figure 14 in that (similar to the embodiments of Figure 9 and 12) the absolute sensor 620 readhead is split into two with the incremental sensor 22 located therebetween. A variation of the embodiment of Figure 15 is that the absolute scale features extend fully across the incremental scale features (i.e. such that there isn't the track 605 of pure incremental scale between two absolute tracks 603). Rather, the absolute scale features can be fully embedded across the entire incremental features like that of Figure 14. In this case, the above comments regarding the two set of diffraction orders still apply due to the incremental and absolute position features having different nominal periods in this embodiment. If desired, in alternative configuration, the incremental sensor 18 and absolute sensor 620 can be arranged as per the embodiment of Figure 14 (i.e. two sensors side-by-side).

The embodiments described above utilise a lensless or a single-lens system through which the light from the light source passed on its way toward and back from the scale. As will be understood, other optical configurations are possible, such as that schematically illustrated in Figure 21 (which also happens to illustrate an absolute encoder apparatus comprising an absolute scale). The encoder 300 of Figure 21 comprises an absolute scale 304 which comprises features arranged notionally periodically, but wherein select features have been removed to encode unique/absolute position data along the measuring length of the scale. The data can be in the form of, for instance, a pseudorandom sequence or discrete codewords. Details of such a scale are described in more detail in US7499827 and US5279044. The readhead 306 (the body of which is omitted for the sake of clarity) shares some parts which are the same as those described above in connection with the other embodiments of the invention, and therefore like parts share the same reference numeral. For instance, the readhead 306 comprises a polarised VCSEL light source 12 and a non-uniform/patterned retarder 14. A first lens 309 is provided which collimates light from the VCSEL 12. An optical beam-splitting member 307 is provided for enabling light from the VCSEL 12 to pass through to the scale 304 to illuminate it and to redirect light reflected by the scale back toward a sensor 320 (in this case a one-dimensional array of photodiodes, e.g. a complimentary metal-oxide-semiconductor "CMOS" sensor) which is configured to sense an image of the scale formed thereat by the second lens 310. The image is processed by a processor device to determine the relative position of the readhead 306 and scale 304 in a known way (e.g. as described in US10989567). As shown, this configuration is less compact than the other embodiments, but has the advantage that the non-uniform/patterned retarder can be placed after the collimating lens and avoids a double-pass through the non-uniform/patterned retarder.

The invention is described above in connection with linear encoder apparatus. However, the invention is equally applicable to rotary encoder apparatus, including both ring encoders (wherein the scale features are formed on the outer cylindrical surface of a ring member) and disc encoders (wherein the scale features are formed on the planar face of a disc member).

**Claims**

1.  A position measurement encoder apparatus comprising:

     a scale comprising a series of position features which are readable by a readhead, the series extending along a measuring dimension;
     a readhead comprising:

      i) a polarised light source for emitting polarised light toward the scale;
      ii) a sensor configured to detect an optical signal from the scale's position features which can be used to determine the relative position of the scale and readhead along the measuring dimension; and
      iii) a polarisation manipulator, located in the optical path between the polarised light source and the sensor, configured such that regardless of the predominant input polarisation orientation of the footprint of light received by the polarisation manipulator, the degree of polarisation of the light output from the polarisation manipulator is less than that of the polarised light emitted from the polarised light source.

2.  An encoder apparatus as claimed in claim 1, wherein the polarisation manipulator is configured such that the degree of polarisation of the light output from at least the region of the footprint of light output from the polarisation manipulator that forms the optical signal at the sensor is less than that of the polarised light emitted from the polarised light source.

3.  An encoder apparatus as claimed in any preceding claim, in which the light from the polarised light source is configured to pass through the polarisation manipulator a first time on its way to the scale and also a second time after it has been reflected from the scale, and is configured such that, after the light's second pass through the polarisation manipulator, the degree of polarisation of the light output from at least the region of the footprint of light output from the polarisation manipulator that forms the optical signal at the sensor is less than that of polarised light emitted from the polarised light source.

4.  An encoder apparatus as claimed in any preceding claim, configured such that, for a notional division of the region of the footprint of light output from the polarisation manipulator that forms the optical signal at the sensor into a one-dimensional array of $n$ rows of equal width, where $n$ is two, the array extending perpendicular to the measuring dimension of the scale, the degree of polarisation of the light output from within each of said n rows, is less than that of the polarised light emitted from the polarised light source .

5.  An encoder apparatus as claimed in claim 3 and 4, in which the requirements of claim 4 is true for both the first and second passes through the polarisation manipulator.

6.  An encoder apparatus as claimed in claim 4 or 5, where n is four, optionally where n is eight.

7.  An encoder apparatus as claimed in any preceding claim, configured such that:

      - in a dimension perpendicular to the measuring dimension;
      - within the area on the sensor illuminated by light from the polarisation manipulator; and
      - but for any polarisers in the path between the polarisation manipulator and the sensor,

the polarisation orientation of light from the polarisation manipulator changes over a length scale smaller than the extent of the sensor by a factor of at least 5.

8.  An encoder apparatus as claimed in any preceding claim, in which the polarisation manipulator comprises an optical retarder element.

9.  An encoder apparatus as claimed in claim 8, in which along at least one dimension the optical retarder element comprises a non-uniform fast axis.

10. An encoder apparatus as claimed in claim 9, in which the at least one dimension along which the fast axis varies is perpendicular to the measuring dimension.

11. An encoder apparatus as claimed in claim 9 or 10, in which the fast axis varies along one dimension only.

12. An encoder apparatus as claimed in any of claims 9 to 11, in which the fast axis varies according to a non-repeating design.

13. An encoder apparatus as claimed in claim 12, in which the fast axis varies according to a phase-wrapped linear function of position along at least one dimension of the optical retarder element.

14. An encoder apparatus as claimed in any of claims 8 to 14, in which the optical retarder element comprises a one-dimensional series of discrete waveplate portions, wherein the series extends in a dimension that is perpendicular the measuring dimension.

15. An encoder apparatus as claimed in any preceding claim, in which the readhead further comprises a lens, and wherein the lens is located between the light source and the polarisation manipulator.

16. An encoder apparatus as claimed in any preceding claim, in which the polarisation manipulator is located in the optical path of the light on its way to, and return from, the scale.

17. An encoder apparatus as claimed in any preceding claim in which the light source is a laser light source, optionally a Vertical Cavity Surface-Emitting Laser (VCSEL).

Figure 1a
(PRIOR ART)

Figure 1b
(PRIOR ART)

Figure 2

Figure 3

Fig. 4(a)

Figure 5(a)

Figure 5(b)

Fig. 4(b)

EP 4 390 325 A1

Figure 6(a)

Figure 6(b)

Figure 7

Figure 8

Figure 9

Figure 10

Figure 11

Figure 12

Figure 13

114

Figure 14

Nom. rideheight

Figure 15a

+75μm

Figure 15b

+150μm

Figure 15c

Nom. rideheight

Figure 16a

+75µm

Figure 16b

+150µm

Figure 16c

Figure 17

Figure 18

Figure 19

Figure 20

Figure 21

Europäisches
Patentamt

European
Patent Office

Office européen
des brevets

# EUROPEAN SEARCH REPORT

**Application Number**

EP 22 27 5164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2003/141441 A1 (KAWANO KATSUNORI [JP] ET AL) 31 July 2003 (2003-07-31) <br> * figure 6 * <br> * paragraphs [0055], [0058], [0077] * <br> * paragraphs [0060] – [0065] * | 1,2,7,8, 15,17 | INV. <br> G01D5/34 <br> G01D5/38 |
| X | US 2003/155489 A1 (YASUDA SHIN [JP] ET AL) 21 August 2003 (2003-08-21) <br> * figures 1, 2A-C, 16A, 16B, 17, 18A, 18B * <br> * paragraphs [0058], [0060], [0116] * | 1-17 | |
| A | US 4 874 245 A (SPILLMAN JR WILLIAM B [US] ET AL) 17 October 1989 (1989-10-17) <br> * figures 1, 2 * | 1-17 | |
| A | US 2009/279100 A1 (MCMURTRY DAVID ROBERTS [GB] ET AL) 12 November 2009 (2009-11-12) <br> * figure 10 * <br> * paragraph [0069] * | 1-17 | |
| A | EP 2 058 630 A1 (FAGOR S COOP [ES]) 13 May 2009 (2009-05-13) <br> * figures 3-7 * <br> * paragraph [0009] * | 1-17 | TECHNICAL FIELDS SEARCHED (IPC) <br><br> G01D |

The present search report has been drawn up for all claims

| Place of search | Date of completion of the search | Examiner |
|---|---|---|
| Munich | 24 May 2023 | Kuchenbecker, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 22 27 5164

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2023

| Patent document cited in search report | | Publication date | Patent family member(s) | | Publication date |
|---|---|---|---|---|---|
| US 2003141441 | A1 | 31-07-2003 | CN | 1435675 A | 13-08-2003 |
| | | | JP | 3695398 B2 | 14-09-2005 |
| | | | JP | 2003222536 A | 08-08-2003 |
| | | | US | 2003141441 A1 | 31-07-2003 |
| US 2003155489 | A1 | 21-08-2003 | CN | 1428594 A | 09-07-2003 |
| | | | JP | 4250894 B2 | 08-04-2009 |
| | | | JP | 2003194586 A | 09-07-2003 |
| | | | US | 2003155489 A1 | 21-08-2003 |
| US 4874245 | A | 17-10-1989 | EP | 0345093 A2 | 06-12-1989 |
| | | | JP | H02118410 A | 02-05-1990 |
| | | | US | 4874245 A | 17-10-1989 |
| US 2009279100 | A1 | 12-11-2009 | CN | 101490510 A | 22-07-2009 |
| | | | EP | 2041521 A2 | 01-04-2009 |
| | | | JP | 2009543087 A | 03-12-2009 |
| | | | US | 2009279100 A1 | 12-11-2009 |
| | | | WO | 2008007061 A2 | 17-01-2008 |
| EP 2058630 | A1 | 13-05-2009 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5861953 A
- US 7659992 B
- US 7499827 B
- US 10132657 B
- US 20120072169 A
- US 20030141441 A

- US 5279044 A
- WO 2005124282 A
- US 4776701 A
- US 10670431 B
- US 10989567 B